# EUROPEAN PATENT APPLICATION

(11) **EP 4 672 008 A1**
(43) Date of publication of application: **31.12.2025**
(21) Application number: 25173407.5
(22) Date of filing: 29.04.2025
(51) Int. Cl.: G06F 13/42, G06F 13/38

(54) **APPARATUS, SYSTEM, AND METHOD OF COMMUNICATING MANAGEMENT TRANSPORT PACKETS OVER A UNIVERSAL CHIPLET INTERCONNECT EXPRESS LINK**

(30) Priority: 28.06.2024 US 202418757574
(71) Applicant: Intel Corporation, Santa Clara, CA 95054 (US)
(72) Inventor: MUTHRASANALLUR, Sridhar, Bangalore (IN); CHOUDHARY, Swadesh, Mountain View, CA, 94041 (US); DAS SHARMA, Debendra, Saratoga, CA, 95070 (US)
(74) Representative: Maiwald GmbH

(57) **Abstract**

For example, an Integrated Circuit, e.g., a chiplet, may include Physical layer (PHY) circuitry to communicate with another IC, e.g., chiplet, over a Universal Chiplet Interconnect Express (UCIe) link. For example, the IC may include a System on Chip (SoC) bridge, which may be configured to transport a plurality of Management Transport Packets (MTPs) over a plurality of connection links of the UCIe link. For example, the SoC bridge may be configured to transport the plurality of MTPs according to a predefined interleaving scheme. For example, the predefined interleaving scheme may define a predefined order of assignment of a plurality of credit-path MTPs to a plurality of Receive (Rx) Queue Identifiers (RxQ-IDs) corresponding to the plurality of connection links.

## Description

### BACKGROUND

A System on Chip (SoC) package may include a plurality of dies (also referred to as chiplets), for example, processing dies, memory dies, accelerator dies, and/or Input/Output (I/O) dies.

Multiple dies on a same package may be connected by die-to-die interconnects, which may be configured according to an on-package interconnect standard, for example, a Universal Chiplet Interconnect express (UCIe) Standard.

For example, the UCIe Standard supports multiple protocols, e.g., including Peripheral Component Interconnect Express (PCIe), Compute Express Link (CXL), and/or streaming, for example on top of a common physical and link layer.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a System on Chip (SoC) package, in accordance with some demonstrative aspects.
Fig. 2 is a schematic illustration of a sideband encapsulated Management Transport Packet (MTP) flow, in accordance with some demonstrative aspects.
Fig. 3 is a schematic illustration of a sideband encapsulated MTP format, in accordance with some demonstrative aspects.
Fig. 4 is a schematic illustration of a mainband encapsulated MTP format, in accordance with some demonstrative aspects.
Fig. 5 is a schematic illustration of a management transport path negotiation between a first chiplet and a second chiplet, in accordance with some demonstrative aspects.
Fig. 6 is a schematic illustration of a management transport path initialization between a first chiplet and a second chiplet, in accordance with some demonstrative aspects.
Fig. 7 is a schematic illustration of a sideband SoC bridge capabilities message format, in accordance with some demonstrative aspects.
Fig. 8 is a schematic illustration of a sideband credit return message format, in accordance with some demonstrative aspects.
Fig. 9 is a schematic illustration of a sideband initialization (Init) done message format, in accordance with some demonstrative aspects.
Fig. 10 is a schematic flow-chart illustration of a method of communicating MTPs over a Universal Chiplet Interconnect express (UCIe) link, in accordance with some demonstrative aspects.
Fig. 11 is a schematic flow-chart illustration of a method of communicating MTPs over a UCIe link, in accordance with some demonstrative aspects.
Fig. 12 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a Personal Computer (PC), a server computer, a User Equipment (UE), a Mobile Device (MD), a desktop computer, a mobile computer, a laptop computer, a notebook computer, a tablet computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication device, a gaming device, a video device, an audio device, an audio-video (A/V) device, and the like.

Some aspects may be used in conjunction with devices and/or networks operating in accordance with existing Universal Chiplet Interconnect Express (UCIe) standards (including *Universal Chiplet Interconnect Express (UCIe) Specification, Revision 1.1, Version 1.0, July 20, 2023;* and/or *UCIE MANAGEMENT TRANSPORT PACKET (MTP) ENCAPSULATION, Revision 0.95, April 2024)* and/or future versions and/or derivatives thereof, and the like.

The term "communicating" as used herein with respect to a signal, a package, a message, or the like, includes transmitting the signal, package, and/or message, and/or receiving the signal, package, and/or message. For example, a device, which is capable of communicating a signal, package, and/or message, may include a transmitter to transmit the signal, package, and/or message to at least one other device, and/or a receiver to receive the signal, package, and/or message from at least one other device. The verb communicating may be used to refer to the action of transmitting or the action of receiving. In one example, the phrase "communicating a signal, package, and/or message" may refer to the action of transmitting the signal, package, and/or message by a first device, and may not necessarily include the action of receiving the signal, package, and/or message by a second device. In another example, the phrase "communicating a signal, package, and/or message" may refer to the action of receiving the signal, package, and/or message by a first device, and may not necessarily include the action of transmitting the signal, package, and/or message by a second device.

As used herein, the term "circuitry" may refer to, be part of, or include, an integrated circuit, an electronic circuit, analog circuitry, digital circuitry, hard wired circuitry, programmable circuitry, processor circuitry, microcontroller circuitry, hardware logic circuitry, state machine circuitry, an Application Specific Integrated Circuit (ASIC), a processor (shared, dedicated, or group), and/or memory (shared, dedicated, or group), that execute one or more software or firmware programs, a combinational logic circuit, and/or other suitable hardware components that provide the described functionality. In some aspects, some functions associated with the circuitry may be implemented by, one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

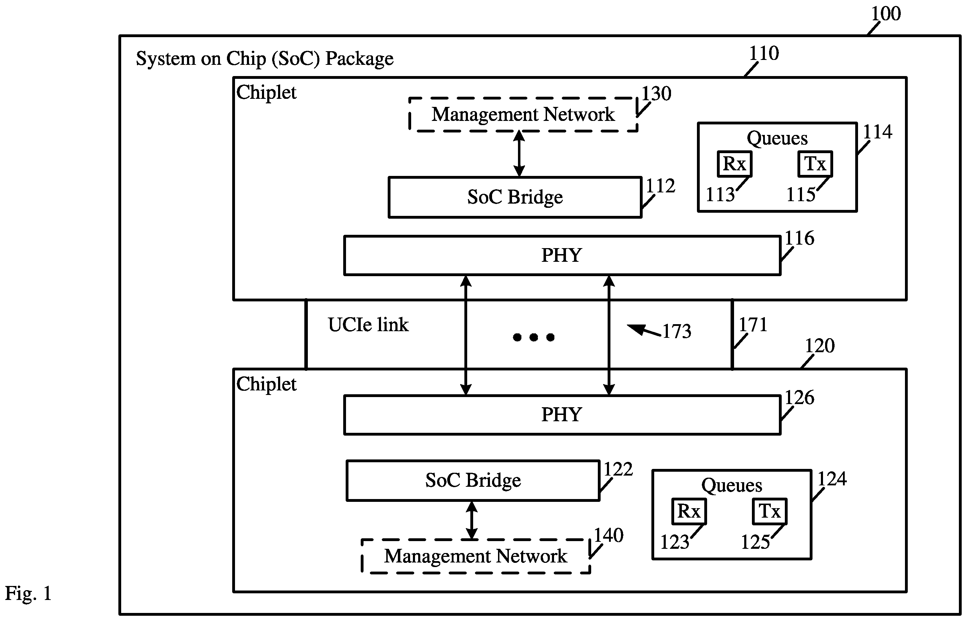

Reference is made to Fig. 1, which schematically illustrates a System on Chip (SoC) package 100, in accordance with some demonstrative aspects.

As shown in Fig. 1, in some demonstrative aspects, SoC package 100 may include a plurality of interconnected Integrated Circuits (ICs), e.g., dies (also referred to as "chiplets"), for example, including an IC (e.g., chiplet) 110, an IC (e.g., chiplet) 120, and/or one or more other ICs (chiplets). Some demonstrative aspects are described below with respect to an IC including a chiplet. In other aspects, the IC may include any other suitable type of IC.

In some demonstrative aspects, for example, chiplet 110 and/or chiplet 120 may include a compute die, e.g., a Central Processing Unit (CPU) die, a Graphic Processing Unit (GPU) die, and/or any other compute die; an accelerate die, e.g., a Neural Processing Unit (NPU) die, an Artificial Intelligence (AI) accelerator die, and/or any other accelerate die; an Input/Output (I/O) tile die, and/or any other additional or alternative type of dies.

In some demonstrative aspects, the plurality of interconnected dies of package 100 may be interconnected by a plurality of UCIe links according to a UCIe architecture. For example, chiplet 110 and chiplet 120 may be interconnected by a UCIe link 171, e.g., as described below.

In some demonstrative aspects, chiplet 110 may include Physical layer (PHY) circuitry 116, which may be configured to communicate with chiplet 120 over a plurality of connection links 173 of the UCIe link 171, for example, in accordance with the *UCIe Specification,* e.g., as described below.

In some demonstrative aspects, chiplet 120 may include PHY circuitry 126, which may be configured to communicate with chiplet 110 over the plurality of connection links 173 of the UCIe link 171, for example, in accordance with the *UCIe Specification,* e.g., as described below.

In some demonstrative aspects, the plurality of connection links 173 may include up to four connection links, e.g., as described below.

In other aspects, the plurality of connection links 173 may include any other count of connection links.

In some demonstrative aspects, the plurality of connection links 173 may include a plurality of Sideband (SB) links, e.g., as described below.

In some demonstrative aspects, the plurality of connection links 173 may include a plurality of Mainband (MB) link stacks, e.g., as described below.

In some demonstrative aspects, the plurality of connection links 173 may include one or more SB links and one or more MB link stacks, e.g., as described below.

In other aspects, the plurality of connection links 173 may include any other additional or alternative type of links.

For example, a sideband link connection may be configured for use for parameter exchanges, register accesses for debug/compliance and coordination with remote partner for Link training and management. For example, the sideband link connection may include a forwarded clock pin and a data pin in each direction. For example, a clock of the sideband link connection may be fixed, e.g., at 800 Megahertz (MHz) or at any other preconfigured rate, for example, regardless of a mainband data rate. For example, sideband logic for the UCIe Physical Layer may be on auxiliary power and an "always on" domain. For example, each module may have its own set of sideband pins. For example, e.g., for an advanced package option, a redundant pair of clock and data pins in each direction may be provided for repair. The sideband link connection may include any other suitable additional or alternative functionality, and/or may be configured according to any other additional or alternative definitions and/or settings.

For example, a MB link connection may be configured to include a main data path of the UCIe link. For example, the MB link connection may include a forwarded clock, a data valid pin, a track pin, and a plurality of lanes, e.g., including N Lanes, of data per module. For example, e.g., for a standard package option, N=16 (also referred to as x16) lanes and no extra pins for repair may be provided. For example, e.g., for the advanced package option, N=64 (also referred to as x64) or N=32 (also referred to as x32) lanes and overall four extra pins for lane repair may be provided. The MB link connection may include any other suitable additional or alternative functionality, and/or may be configured according to any other additional or alternative definitions and/or settings.

In some demonstrative aspects, chiplet 110 and/or chiplet 120 may be configured to perform one or more operations and/or functionalities of a Management Transport Packet (MTP) transportation mechanism, which may be configured to support transportation of MTPs over the plurality of connection links 173 of the UCIe link 171 between chiplet 110 and chiplet 120, e.g., as described below.

In some demonstrative embodiments, the MTPs may include messages, which may be used, for example, for management related functionality on a management network in UCIe based chiplets, e.g., chiplet 110 and/or chiplet 120, e.g., as described below.

In some demonstrative aspects, the MTPs may be encapsulated, for example, by adding a 2 Double Word (DW) header, and, e.g., if required, a 1DW data padding at the end of an MTP, for example, to transmit it over a SB or MB UCIe link.

In some demonstrative aspects, chiplet 110 and/or chiplet 120 may be configured to perform one or more operations and/or functionalities of an MTP transportation mechanism, which may be configured to support transporting UCIe MTPs over multiple UCIe SB links and/or multiple UCIe MB link stacks, for example, while maintaining management network ordering, e.g., as described below.

In some demonstrative aspects, the MTP transportation mechanism may be configured to provide a technical solution to support increased, e.g., maximized, bandwidth, for example, for transferring UCIe MTPs over multiple UCIe SB links and/or multiple UCIe MB link stacks.

In some demonstrative aspects, the MTP transportation mechanism may be configured to provide a technical solution to support parallel transmission of the UCIe MTPs over multiple UCIe SB links and/or multiple UCIe MB link stacks, e.g., as described below.

In some demonstrative aspects, the MTP transportation mechanism may be configured to provide a technical solution to maintain management network ordering requirements between packets sent on the multiple connection links, for example, even in case the UCIe MTPs are transmitted in parallel over multiple UCIe SB links and/or multiple UCIe MB link stacks, e.g., as described below.

In some demonstrative aspects, the MTP transportation mechanism may be configured to provide a technical solution to maintain management network ordering requirements between packets sent on the multiple connection links, for example, while obviating the use of a memory reordering buffer and/or complex reordering software, e.g., as described below. For example, in the context of chiplet interconnects, a solution utilizing a memory reordering buffer and/or complex reordering software may not be practical, e.g., since not all chiplets may be able to afford the complexity or the added latency of firmware performing this reordering.

In some demonstrative aspects, the MTP transportation mechanism may be configured to provide a technical solution to maintain management network ordering requirements between UCIe MTPs transported over multiple UCIe SB links and/or multiple UCIe MB link stacks, for example, using a hardware implementation, for example, with substantially not storage overhead.

In some demonstrative aspects, the MTP transportation mechanism may be configured to provide a technical solution to maintain management network ordering requirements between UCIe MTPs transported over multiple UCIe SB links and/or multiple UCIe MB link stacks, for example, in a manner which may be relatively simple for implementation and/or may support improved performance.

In some demonstrative aspects, chiplet 110 may include an SoC bridge 112, which may be configured to transport MTPs between a local SOC management network (fabric) 130 and the UCIe link 171, e.g., as described below.

In some demonstrative aspects, SoC bridge 112 may be implemented by suitable SoC bridge circuitry and/o logic, which may be configured to perform the functionality of SoC bridge 112.

In some demonstrative aspects, chiplet 120 may include an SoC bridge 122, which may be configured to transport MTPs between a local SOC management network (fabric) 140 and the UCIe link 171, e.g., as described below.

In some demonstrative aspects, SoC bridge 122 may be implemented by suitable SoC bridge circuitry and/o logic, which may be configured to perform the functionality of SoC bridge 122.

In some demonstrative aspects, an SoC bridge may be configured as an entity that provides a bridging functionality when transporting an MTP from/to a local SoC management fabric, e.g., which may be an SoC-specific implementation, to/from a UCIe link.

For example, SoC bridge 112 may be configured to provide a bridging functionality when transporting an MTP from/to local SoC management fabric 130 to/from a UCIe link 171, e.g., as described below.

For example, SoC bridge 122 may be configured to provide a bridging functionality when transporting an MTP from/to local SoC management fabric 140 to/from a UCIe link 171, e.g., as described below.

In some demonstrative aspects, SoC bridge 112 and/or SoC bridge 122 may be configured to setup a management path over the UCIe link 171, e.g., as described below.

In some demonstrative aspects, SoC bridge 112 and/or SoC bridge 122 may be configured to transport encapsulated MTPs, e.g., in the form of Management Encapsulation Messages (MEMs), over the management path over the UCIe link 171, e.g., as described below.

In some demonstrative aspects, chiplet 110 may include a plurality of queues 114, which may be configured to queue MTPs communicated by PHY 116 over the connection links 173 of the UCIe link 171, e.g., as described below.

In some demonstrative aspects, queues 114 may be configured as First-In-First-Out (FIFO) queues, e.g., as described below. In other aspects, any other queue mechanism may be implemented.

For example, queues 114 may include Transmit (Tx) queues 115, which may be configured to queue transmitted MTPs to be transmitted over the connection links 173 of the UCIe link 171, e.g., from chiplet 110 to chiplet 120.

For example, SoC bridge 112 may be configured to multiplex transmitted MTPs from the management network 130 to the Tx queues 115, e.g., as described below.

For example, queues 114 may include Receive (Rx) queues 113, which may be configured to queue received MTPs received over the connection links 173 of the UCIe link 171, e.g., from chiplet 120.

For example, SoC bridge 112 may be configured to multiplex received MTPs from the Rx queues 113 to the management network 130, e.g., as described below.

In some demonstrative aspects, chiplet 120 may include a plurality of queues 124, which may be configured to queue MTPs communicated by PHY 126 over the connection links 173 of the UCIe link 171, e.g., as described below.

In some demonstrative aspects, queues 124 may be configured as FIFO queues, e.g., as described below. In other aspects, any other queue mechanism may be implemented.

For example, queues 124 may include Tx queues 125, which may be configured to queue transmitted MTPs to be transmitted over the connection links 173 of the UCIe link 171, e.g., from chiplet 120 to chiplet 110.

For example, SoC bridge 122 may be configured to multiplex transmitted MTPs from the management network 140 to the Tx queues 125, e.g., as described below.

For example, queues 124 may include Rx queues 123, which may be configured to queue received MTPs received over the connection links 173 of the UCIe link 171, e.g., from chiplet 110.

For example, SoC bridge 122 may be configured to multiplex received MTPs from the Rx queues 123 to the management network 140, e.g., as described below.

In some demonstrative aspects, an SoC bridge may be implemented as a bridge between the PHY layer of a chiplet and a Die-to-Die (D2D) adapter layer of the chiplet. For example, the SoC bridge may be implemented as a bridge between the PHY layer and the D2D adapter layer of the chiplet, for example, as part of a UCIe sideband management architecture, for example, to support transportation of MTPs over a plurality of SB links.

For example, SoC bridge 112 may be implemented as a bridge between the PHY circuitry 116 and a D2D adapter layer (not shown) of the chiplet 110, for example, as part of a UCIe sideband management architecture, for example, to support transportation of MTPs over a plurality of SB links of the UCIe link 171.

For example, SoC bridge 122 may be implemented as a bridge between the PHY circuitry 126 and a D2D adapter layer (not shown) of the chiplet 120, for example, as part of a UCIe sideband management architecture, for example, to support transportation of MTPs over a plurality of SB links of the UCIe link 171.

In some demonstrative aspects, an SoC bridge may be implemented as a bridge between the D2D adapter layer of the chiplet and a protocol layer of the chiplet. For example, the SoC bridge may be implemented as a bridge between the D2D adapter layer and the protocol layer of the chiplet, for example, as part of a UCIe mainband management architecture, for example, to support transportation of MTPs over a plurality of MB link stacks.

For example, SoC bridge 112 may be implemented as a bridge between the PHY circuitry 116 and the D2D adapter layer (not shown) of the chiplet 110, for example, as part of a UCIe mainband management architecture, for example, to support transportation of MTPs over a plurality of MB link stacks of the UCIe link 171.

For example, SoC bridge 122 may be implemented as a bridge between the PHY circuitry 126 and the D2D adapter layer (not shown) of the chiplet 120, for example, as part of a UCIe mainband management architecture, for example, to support transportation of MTPs over a plurality of MB link stacks of the UCIe link 171.

In some demonstrative aspects, chiplet 110 and/or chiplet 120 may be configured to perform one or more operations and/or functionalities of an MTP transportation mechanism, which may be configured to utilize a plurality of Receive Queues (RxQs) to queue received MTPs at a chiplet, for example, to provide a technical solution to support multiplexing of the received MTPs to the management network of the chiplet, e.g., as described below.

In some demonstrative aspects, it may be defined according to the MTP transportation mechanism that, for example, for each sideband link or mainband stack, a dedicated RxQ, e.g., a FIFO RxQ, is to be maintained by a chiplet for each credit type, e.g., as described below.

In some demonstrative aspects, it may be defined according to the MTP transportation mechanism that, for example, a credit type of an MTP is defined as a tuple of virtual channel number and request (Req) type of the MTP, e.g., as described below.

For example, it may be defined according to the MTP transportation mechanism that, for example, a chiplet is to maintain an RxQ, e.g., a dedicated RxQ, for example, per credit path, e.g., per each credit path, e.g., as described below.

For example, an RxQ corresponding to a credit path may be used to buffer received MTPs of the credit path, for example, to provide a technical solution to maintain ordering on the credit type, e.g., as described below.

For example, it may be defined according to the MTP transportation mechanism that an RxQ is to be assigned with an identifier (ID), e.g., an RxQ ID (RxQ-ID), to identify, e.g., to uniquely identify the RxQ from other RxQs, e.g., as described below.

For example, it may be defined according to the MTP transportation mechanism that, for example, credit management, e.g., independent credit management, is to be performed, for example, per each response type, e.g., requests vs responses, and per each supported VC, e.g., as described below.

In some demonstrative aspects, it may be defined according to the MTP transportation mechanism that if there are *N* sideband links, there should be RxQs, e.g., assigned with *N* respective RxQ-ID values, e.g., RxQ-ID values of 0 to N-1, as described below.

In some demonstrative aspects, it may be defined according to the MTP transportation mechanism that a chiplet intending to transmit MTPs ("transmitter chiplet") is to start transmitting MTPs of a credit type on a sideband link or a mainband link stack with an RxQ-ID of 0.

In some demonstrative aspects, it may be defined according to the MTP transportation mechanism that, e.g., for every subsequent message in the same credit path, the transmitter chiplet is to increment the RxQ-ID by 1, e.g., as described below.

In some demonstrative aspects, it may be defined according to the MTP transportation mechanism that the transmitter chiplet is to wrap around the RxQ-ID value, for example, after reaching a maximal (max) RxQ-ID value, e.g., as described below.

In some demonstrative aspects, it may be defined according to the MTP transportation mechanism that the RxQ-ID value is to carried on a header of an encapsulated MTP, for example, to support a receiver chiplet to identify the RxQ to which the MTP is destined, e.g., as described below.

In some demonstrative aspects, it may be defined according to the MTP transportation mechanism that a chiplet, which is to receive MTPs ("receiver chiplet") is to maintain a plurality of RxQs, e.g., as described below.

In some demonstrative aspects, it may be defined according to the MTP transportation mechanism that, for example, the receiver chiplet is to maintain for each sideband link or mainband stack, a dedicated RxQ, e.g., a FIFO RxQ, for example, for each credit type, e.g., as described below.

In some demonstrative aspects, it may be defined according to the MTP transportation mechanism that the receiver chiplet is to manage each RxQ as a FIFO, for example, per credit type, e.g., as described below.

In some demonstrative aspects, it may be defined according to the MTP transportation mechanism that the receiver chiplet is to wait first to service a message on a first RxQ-ID, e.g., on RxQ-ID 0, and then go to service a message on a next RxQ-ID, e.g., on RxQ-ID 1, and so on.

In some demonstrative aspects, it may be defined according to the MTP transportation mechanism that the receiver chiplet is to transmit the retrieved MTPs on its internal management network, for example, according to the order of the RxQ-IDs, thus maintaining ordering, for example, per the original management network packet order, e.g., as described below.

In some demonstrative aspects, the configuration of the transmitter chiplet to transmit the MTPs according to the order of the RxQ-ID values, and/or the configuration of the receiver chiplet to service the MTPs according to the order of the RxQ-ID values, may be implemented to provide a technical solution to maintain the ordering of MTPs of a credit type, e.g., as described below.

In some demonstrative aspects, SoC bridge 122 may be configured to transmit a plurality of MTPs to the chiplet 110 over the plurality of connection links 173 of the UCIe link 171, e.g., as described below.

In some demonstrative aspects, the plurality of MTPs may include one or more sequences of credit-path MTPs corresponding to one or more credit paths, e.g., as described below.

In some demonstrative aspects, the SoC bridge 122 may be configured to transmit a plurality of credit-path MTPs of a sequence of credit-path MTPs over the plurality of connection links 173, for example, according to a predefined interleaving scheme, e.g., as described below.

In some demonstrative aspects, the predefined interleaving scheme may be configured to define a predefined order of assignment of the plurality of credit-path MTPs of the sequence of credit-path MTPs to a plurality of Receive (Rx) Queue Identifiers (RxQ-IDs) corresponding to the plurality of connection links 173, e.g., as described below.

In some demonstrative aspects, a credit path may include a tuple of a Virtual Channel (VC) number and a request/response type, e.g., as described below.

In some demonstrative aspects, the VC number may be equal to or greater than zero and equal to or less than 7, e.g., as described below. In other aspects, the VC number may be defined to include any other additional or alternative values.

In some demonstrative aspects, the request/response type may include a request type or a response type, e.g., as described below.

In other aspects, the credit path may be defined according to any other additional or alternative parameters.

In some demonstrative aspects, SoC bridge 122 may be configured to set an RxQ-ID field in a header of a credit-path MTP to an RxQ-ID to which the credit-path MTP is assigned, e.g., as described below.

In some demonstrative aspects, SoC bridge 122 may be configured to assign a first credit-path MTP of the plurality of credit-path MTPs to a first RxQ-ID, e.g., as described below.

In some demonstrative aspects, SoC bridge 122 may be configured to assign a second credit-path MTP, e.g., which is subsequent to the first credit-path MTP in the sequence of credit-path MTPs, to a second RxQ-ID, e.g., which is subsequent to the first RxQ-ID in the plurality of RxQ-IDs, e.g., as described below.

In some demonstrative aspects, SoC bridge 122 may be configured to set an RxQ-ID value to an initial RxQ-ID value, e.g., as described below.

In some demonstrative aspects, SoC bridge 122 may be configured to assign a first-in-order credit-path MTP of the sequence of credit-path MTPs to an initial RxQ-ID corresponding to the initial RxQ-ID value, e.g., as described below.

In some demonstrative aspects, SoC bridge 122 may be configured to determine an incremented RxQ-ID value, for example, by incrementing the RxQ-ID value by one, e.g., as described below.

In some demonstrative aspects, SoC bridge 122 may be configured to assign a next-in-order credit-path MTP of the sequence of credit-path MTPs to an RxQ-ID corresponding to the incremented RxQ-ID value, e.g., as described below.

In some demonstrative aspects, SoC bridge 122 may be configured to repeat determining the incremented RxQ-ID value and assigning the next-in-order credit-path MTP to the RxQ-ID corresponding to the incremented RxQ-ID value, for example, while wrapping around to the initial RxQ-ID value, for example, when reaching a maximal RxQ-ID value, e.g., as described below.

In some demonstrative aspects, the maximal RxQ-ID value may be based, for example, on a count of the plurality of RxQ-IDs, e.g., as described below.

In some demonstrative aspects, SoC bridge 122 may be configured to determine that a credit-path MTP is to be transmitted as a segmented credit-path MTP, e.g., as described below.

In some demonstrative aspects, SoC bridge 122 may be configured to transmit a plurality of segments of the segmented credit-path MTP in a plurality of encapsulated MTPs assigned to the plurality of RxQ-IDs according to the interleaving scheme, for example, based on a determination that a credit-path MTP is to be transmitted as a segmented credit-path MTP, e.g., as described below.

In some demonstrative aspects, SoC bridge 122 may be configured to set a segmentation-indication bit (s bit) to a predefined value, e.g., a value of "1", in a header of each of the plurality of encapsulated MTPs, for example, except for a last encapsulated MTP of the plurality of encapsulated MTPs, e.g., as described below.

In some demonstrative aspects, SoC bridge 122 may be configured to ensure that no other encapsulated MTP, which does not belong to the segmented credit-path MTP, and which belongs to a same credit path as the segmented credit-path MTP, is not to be interleaved over the plurality of RxQ-IDs, for example, before completing assignment of the plurality of encapsulated MTPs to the plurality of RxQ-IDs, e.g., as described below.

In some demonstrative aspects, SoC bridge 122 may be configured to determine that a credit-path MTP is to be transmitted as a non-segmented credit-path MTP, e.g., as described below.

In some demonstrative aspects, SoC bridge 122 may be configured to transmit an entirety of the non-segmented credit-path MTP, for example, by assigning any encapsulated MTPs of the non-segmented credit-path MTP to a same single RxQ-ID, for example, based on a determination that a credit-path MTP is to be transmitted as a non-segmented credit-path MTP, e.g., as described below.

In some demonstrative aspects, SoC bridge 122 may be configured to transmit a first plurality of credit-path MTPs in a first sequence of credit-path MTPs, e.g., of a first VC, over the plurality of connection links 173, for example, by assigning the first plurality of credit-path MTPs to the plurality of RxQ-IDs according to the predefined interleaving scheme, e.g., as described below.

In some demonstrative aspects, SoC bridge 122 may be configured to transmit a second plurality of credit-path MTPs in a second sequence of credit-path MTPs, e.g., of a second VC, over the plurality of connection links 173, for example, by assigning the second plurality of credit-path MTPs to the plurality of RxQ-IDs according to the predefined interleaving scheme, e.g., as described below.

In some demonstrative aspects, SoC bridge 122 may be configured to assign the second plurality of credit-path MTPs, e.g., of the second VC, to the plurality of RxQ-IDs, for example, independently from the assigning of the first plurality of credit-path MTPs, e.g., of the first VC, to the plurality of RxQ-IDs, e.g., as described below.

In some demonstrative aspects, chiplet 110 may receive, e.g., at PHY 116, the encapsulated MTPs, which were transmitted by chiplet 120 over the connection links 173.

In some demonstrative aspects, SoC bridge 112 may be configured to queue the encapsulated MTPs received from chiplet 120 in the queues 114, and to multiplex the encapsulated MTPs from the queues 114 to the management network 130, e.g., as described below.

In some demonstrative aspects, SoC bridge 112 may be configured to transport to the local SoC management network 130 the plurality of MTPs received from the chiplet 120 over the plurality of connection links 173 of the UCIe link 171, e.g., as described below.

In some demonstrative aspects, SoC bridge 112 may be configured to queue the plurality of MTPs, for example, by queuing a plurality of credit-path MTPs corresponding to a credit path in a plurality of FIFO RxQs 113, e.g., as described below.

In some demonstrative aspects, the plurality of credit-path MTPs corresponding to the credit path may be assigned to the plurality of FIFO RxQs 113, for example, according to a plurality of RxQ Identifiers (RxQ-IDs) corresponding to the plurality of connection links, e.g., as described below.

In some demonstrative aspects, SoC bridge 112 may be configured to service the plurality of MTPs to the local SoC management network 130, for example, according to the predefined interleaving scheme, which may define the predefined order of servicing the plurality of credit-path MTPs from the plurality of FIFO RxQs 113, e.g., as described below.

In some demonstrative aspects, SoC bridge 112 may be configured to process RxQ-ID field in a header of a credit-path MTP, for example, to identify an RxQ-ID value, e.g., as described below.

In some demonstrative aspects, SoC bridge 112 may be configured to assign the credit-path MTP to a FIFO RxQ 113 having an RxQ-ID corresponding to the RxQ-ID value, e.g., as described below.

In some demonstrative aspects, SoC bridge 112 may be configured to identify a message from the chiplet 120 as a message that does not consume credits, and to process the message, for example, without allocating the message into the FIFO RxQs 113, e.g., as described below.

For example, it may be defined according to the MTP transportation mechanism that messages that do not consume credits, must not be allocated by the receiver chiplet into the credited Rx queues. For example, it may be defined according to the MTP transportation mechanism that the messages that do not consume credits must be consumed by the receiver chiplet, e.g., unconditionally. For example, the messages that do not consume credits may include credit return messages, Power Mode (PM) messages, e.g., PM wake, PM acknowledge (ack), and/or PM sleep messages, and/or any other suitable type of messages.

In some demonstrative aspects, SoC bridge 112 may be configured to service to the local SoC management network 130 a first credit-path MTP of the plurality of credit-path MTPs from a first FIFO RxQ 113 having a first RxQ-ID, e.g., as described below.

In some demonstrative aspects, SoC bridge 112 may be configured to service to the local SoC management network 130 a second credit-path MTP of the plurality of credit-path MTPs, for example, and, subsequent to servicing the first credit-path MTP to the local SoC management network 130, e.g., as described below.

In some demonstrative aspects, SoC bridge 112 may be configured to service to the local SoC management network 130 the second credit-path MTP of the plurality of credit-path MTPs from a second FIFO RxQ 113 having a second RxQ-ID, which is subsequent to the first RxQ-ID in the plurality of RxQ-IDs, e.g., as described below.

In some demonstrative aspects, SoC bridge 112 may be configured to set an RxQ-ID value to an initial RxQ-ID value, e.g., as described below.

In some demonstrative aspects, SoC bridge 112 may be configured to service to the local SoC management network 130 a credit-path MTP of the plurality of credit-path MTPs, for example, from an initial FIFO RxQ 113 having an RxQ-ID corresponding to the initial RxQ-ID value, e.g., as described below.

In some demonstrative aspects, SoC bridge 112 may be configured to determine an incremented RxQ-ID value, for example, by incrementing the RxQ-ID value, for example, by one, e.g., as described below.

In some demonstrative aspects, SoC bridge 112 may be configured to service to the local SoC management network 130 a next credit-path MTP of the plurality of credit-path MTPs, for example, from a FIFO RxQ 113 having an RxQ-ID corresponding to the incremented RxQ-ID value, e.g., as described below.

In some demonstrative aspects, SoC bridge 112 may be configured to repeat determining the incremented RxQ-ID value and service to the local SoC management network 130 the next credit-path MTP, for example, from the FIFO RxQ 113 having the RxQ-ID corresponding to the incremented RxQ-ID value, for example, while wrapping around to the initial RxQ-ID value, for example, when reaching a maximal RxQ-ID value, e.g., as described below.

In some demonstrative aspects, the maximal RxQ-ID value may be based, for example, on a count of the plurality of RxQ-IDs, e.g., as described below.

In some demonstrative aspects, SoC bridge 112 may be configured to determine that a credit-path MTP is received as a segmented credit-path MTP, e.g., as described below.

In some demonstrative aspects, SoC bridge 112 may be configured to service to the local SoC management network 130 a plurality of segments of the segmented credit-path MTP from a plurality of encapsulated MTPs serviced from the plurality of FIFO RxQs 113 according to the interleaving scheme, for example, based on the determination that the credit-path MTP is received as a segmented credit-path MTP, e.g., as described below.

In some demonstrative aspects, SoC bridge 112 may be configured to identify the plurality of encapsulated MTPs, for example, based on identification of a segmentation-indication bit (s bit) to 1 in a header of each of the plurality of encapsulated MTPs, for example, except for a last encapsulated MTP of the plurality of encapsulated MTPs, e.g., as described below.

In some demonstrative aspects, SoC bridge 112 may be configured to determine that a credit-path MTP is received as a non-segmented credit-path MTP, e.g., as described below.

In some demonstrative aspects, SoC bridge 112 may be configured to service to the local SoC management network 130 any encapsulated MTPs of the non-segmented credit-path MTP from a same single FIFO RxQ 113, for example, based on the determination that the credit-path MTP is received as a non-segmented credit-path MTP, e.g., as described below.

In some demonstrative aspects, SoC bridge 112 may be configured to service a first plurality of credit-path MTPs of a first credit path, e.g., of a first VC, to the local SoC management network 130, for example, by servicing the first plurality of credit-path MTPs from a first plurality of FIFO RxQs 113, for example, according to the predefined interleaving scheme, e.g., as described below.

In some demonstrative aspects, SoC bridge 112 may be configured to service a second plurality of credit-path MTPs of a second credit path, e.g., of a second VC, to the local SoC management network 130, for example, by servicing the second plurality of credit-path MTPs from a second plurality of FIFO RxQs 113, for example, according to the predefined interleaving scheme, e.g., as described below.

In some demonstrative aspects, SoC bridge 112 may be configured to service the second plurality of credit-path MTPs from the second plurality of FIFO RxQs 113 to the local SoC management network 130, for example, independently servicing the first plurality of credit-path MTPs from the first plurality of FIFO RxQs 113 to the local SoC management network 130, e.g., as described below.

In some demonstrative aspects, an SoC bridge, e.g., SoC bridge 112 and/or SoC bridge 122, may be configured to communicate one or more messages, for example, credit return messages, which may be configured to indicate credits associated with one or more RxQ-IDs, e.g., as described below.

In some demonstrative aspects, an SoC bridge, e.g., SoC bridge 112 and/or SoC bridge 122, may be configured to exchange with a remote link partner, e.g., SoC bridge 122 and/or So bridge 112, credits associated with one or more RxQ-IDs, e.g., with each RxQ-ID, for example, via exchanges of one or more credit return messages e.g., as described below.

In some demonstrative aspects, SoC bridge 112 may be configured to transmit a credit return message to the chiplet 120, e.g., as described below.

In some demonstrative aspects, SoC bridge 112 may be configured to set the credit return message to include an RxQ-ID value in an RxQ-ID field, for example, to identify an RxQ-ID of an RxQ.

In some demonstrative aspects, SoC bridge 112 may be configured to set the credit return message to indicate a credit path, e.g., as described below.

In some demonstrative aspects, SoC bridge 112 may be configured to set the credit return message to include a VC channel value in a VC field, and a request/response type value in a request/response type field, for example, to identify the credit path, e.g., as described below.

In some demonstrative aspects, SoC bridge 112 may be configured to set the credit return message to include a credit return value in a credit return field, for example, to indicate a credit return to be assigned to the RxQ-ID for the credit path, e.g., as described below.

In some demonstrative aspects, SoC bridge 122 may be configured to process the credit return message from the chiplet 110, e.g., as described below.

In some demonstrative aspects, SoC bridge 122 may be configured to process the credit return message from the chiplet 110, for example, to determine an RxQ-ID based on the RxQ-ID value in the RxQ-ID field, e.g., as described below.

In some demonstrative aspects, SoC bridge 122 may be configured to process the credit return message from the chiplet 110, for example, to determine a credit path based, for example, on the VC channel value in the VC field and the request/response type value in the request/response type field, e.g., as described below.

In some demonstrative aspects, SoC bridge 122 may be configured to process the credit return message from the chiplet 110, for example, to determine the credit return to be assigned to the RxQ-ID for the credit path, for example, based on the credit return value in the credit return field, e.g., as described below.

In some demonstrative aspects, chiplet 110 and/or chiplet 120 may be configured according to an MTP transportation mechanism, which may define, for example, that a chiplet, e.g., chiplet 110 and/or chiplet 120, may be permitted to segment a single large MTP, and to interleave the segments of the MTP, for example, across multiple RxQ-IDs.

For example, an SoC bridge of a transmitter chiplet, e.g., SoC bridge 122, may be permitted to break-up (segment) a single large MTP, and to send the individual segments of the MTP to the chiplet 110, for example, by interleaving the segments of the MTP across multiple RxQ-IDs of chiplet 110, e.g., as described below.

For example, the segmentation of the MTPs may be useful, for example, to provide a technical solution in cases where the MTP message sizes are very asymmetric.

For example, the MTP transportation mechanism may be configured to define, for example, that when segmentation is supported, segmented MTPs may be interleaved according to interleaving rules for individual segments of a segmented MTP, which may be similar to, e.g., identical to, interleaving rules for non-segmented MTPs, e.g., as described below.

For example, the MTP transportation mechanism may be configured to define, for example, that an SoC bridge, which segments an MTP, e.g., SoC bridge 122, is to set a predefined bit (also referred to as *"s bit*") to a predefined bit value, e.g., "1", which is to identify segmentation, in an MTP message header, e.g., an encapsulated MTP message header, carrying an MTP segment.

For example, the MTP transportation mechanism may be configured to define, for example, that the SoC bridge, which segments the MTP, e.g., SoC bridge 122, is to set the s *bit* to 1, for example, in the encapsulated MTP message header, for example, in each individual segment, for example, except the very last segment that completes the full MTP transfer.

For example, the MTP transportation mechanism may be configured to define, for example, that the s *bit* is to have another predefined value, e.g., "0", for example, if an MTP is not segmented.

For example, the MTP transportation mechanism may be configured to define, for example, that segments with the s *bit* set, e.g., to 1, must not have a padding bit (p bit) set.

For example, the MTP transportation mechanism may be configured to define, for example, that when segmenting MTPs, an SoC bridge of a transmitter chiplet, e.g., SoC bridge 122, must ensure that no other MTP from the same VC/Resp credit type is interleaved, for example, until the transport of the segmented MTP completes.

For example, the MTP transportation mechanism may be configured to define, for example, that when transmitting MTPs, an SoC bridge of a transmitter chiplet, e.g., SoC bridge 122, is to include an RxQ-ID value in a packet header, for example, to indicate which RxQ the packet is destined to at the receiver chiplet, e.g., as described below.

For example, the MTP transportation mechanism may be configured to define, for example, that an SoC bridge of a transmitter chiplet, e.g., SoC bridge 122, is to, e.g., must, interleave different MTPs of a given VC:Resp credit type across the different RxQ-IDs, for example, when multiple RxQ-IDs are negotiated with the receiving chiplet, e.g., chiplet 110. For example, the interleaving of MTPs may include sending the MTPs over a plurality of different RXQ-IDs, for example, according to a predefined interleaving scheme.

For example, the interleaving scheme may include interleaving rules, which may be configured, for example, to provide a technical solution to support maintaining an original management packet ordering, for example, when the MTPs eventually make it to the management network on the receiving partner chiplet, e.g., chiplet 110.

For example, the interleaving scheme may include a plurality of transmit interleaving rules, which may be implemented at an SoC bridge of a transmitter chiplet, e.g., SoC bridge 122, e.g., as described below.

For example, the interleaving scheme may define that the SoC bridge of the transmitter chiplet, e.g., SoC bridge 122, is to transmit a first encapsulated MTP of a particular credit type (VCy:Respz), which corresponds to a tuple of a particular VC (VCy) and a particular response type (Respz), to RxQ-ID0:VCy:Respz credit buffers of the partner chiplet, e.g., chiplet 110, which have the RxQ-ID=0.

For example, the interleaving scheme may define that when the MTP is not segmented, then the SoC bridge, e.g., SoC bridge 122, is to fully transmit the MTP to the associated credit buffers of the same RxQ-ID. For example, the non-segmented MTP may be transmitted in multiple encapsulated MTPs. In one example, each encapsulated MTP may carry the same MEM header, e.g., but with a length field adjusted for the data length in each message.

For example, the interleaving scheme may define that the SoC bridge, e.g., SoC bridge 122, is to increment the RxQ-ID, e.g., by 1, for example, for transmitting the next management packet of the same VCy:Respz credit type. For example, the next management packet of the VCy:Respz credit type may be sent to the RxQ-ID1:VCy:Respz credit buffers of the chiplet 110.

For example, the interleaving scheme may define that when the management transport packet is segmented, then the SoC bridge, e.g., SoC bridge 122, is to transmit a single encapsulated MTP belonging to the management packet the associated buffers, e.g., with the "s" bit set.

For example, the interleaving scheme may define that the SoC bridge, e.g., SoC bridge 122, is to increment the RxQ-ID, e.g., by 1, for example, for transmitting each subsequent segment of the same management transport packet, e.g., until the MTP is fully sent.

For example, the interleaving scheme may define that the SoC bridge, e.g., SoC bridge 122, is to increment the RxQ-ID, e.g., by 1, for example, once the MTP is fully sent, for example, for transmitting the next management transport packet of the same VCy:Respz credit type.

For example, the interleaving operations of the interleaving scheme may be repeated, e.g., independently, for example, for traffic in each different VCy:Respz credit type. For example, transmission of packets on different VCy:Respz queues may have no dependencies between them.

For example, the interleaving scheme may define that the SoC bridge, e.g., SoC bridge 122, is to wrap around the RxQ-ID value, for example, after a max negotiated RxQ-ID.

For example, the interleaving scheme may define that the SoC bridge, e.g., SoC bridge 122, may be allowed to transmit to multiple RxQ-ID buffers, for example, in parallel on sideband links or mainband link stacks.

For example, the interleaving scheme may include a plurality of receive interleaving rules, which may be implemented at an SoC bridge of a receiver chiplet, e.g., SoC bridge 112, e.g., as described below.

For example, the interleaving scheme may define that the SoC bridge of the receiver chiplet, e.g., SoC bridge 112, is to service a full management packet, e.g., in case of a non-segmented MTP, or 1 encapsulated MTP of a management transport packet, e.g., in case of a segmented MTP, on a first RxQ-ID, e.g., an RxQ-ID0:VCy:Respz queue, for a particular VCy:Respz credit type. For example, a full management transport packet may be received over multiple Encapsulated MTPs e.g., as described above.

For example, the interleaving scheme may define that the SoC bridge of the receiver chiplet, e.g., SoC bridge 112, is to service a next full management packet, e.g., in case of a non-segmented MTP, or a next encapsulated MTP of the management transport packet, e.g., in case of a segmented MTP, on a next RxQ-ID, e.g., the RxQ-ID1:VCy:Respz queue, and then on a next RxQ-ID, e.g., the RxQ-ID2:VCy:Respz queue (if supported), and so on.

For example, the interleaving scheme may define that the SoC bridge of the receiver chiplet, e.g., SoC bridge 112, may detect the "s" bit being cleared, e.g., from being set in prior segments, for example, to identify the last segment of a management transport packet.

For example, the interleaving scheme may define that the SoC bridge of the receiver chiplet, e.g., SoC bridge 112, is to wrap around the RxQ-ID value, for example, after the max negotiated RxQ-ID.

For example, the receiver interleaving operations of the interleaving scheme may be applied by the SoC bridge of the receiver chiplet, e.g., independently, for example, for each VCy:Respz credit type, e.g., with no dependencies between them.

For example, the interleaving scheme may define that messages that do not consume credits, e.g., credit returns, and/or PM wake/ack/sleep messages, must not be allocated into the credited Rx queues, and are to be consumed by the SoC bridge of the receiver chiplet, e.g., SoC bridge 112, unconditionally.

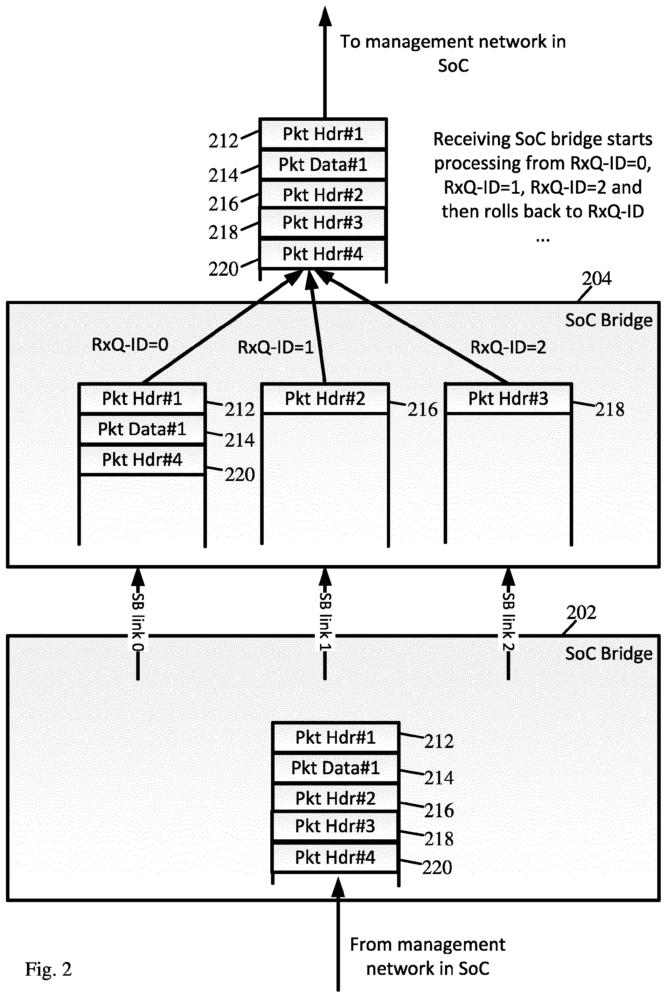

Reference is made to Fig. 2, which schematically illustrates a sideband encapsulated MTP flow, in accordance with some demonstrative aspects.

In some demonstrative aspects, as shown in Fig. 2, a first SoC bridge 202 may perform the role of a transmitter SoC bridge to transmit encapsulated MTPs to a second SoC bridge 204, which may perform the role of a receiver SoC bridge.

For example, SoC bridge 122 (Fig. 1) may perform one or more operations of, and/or functionalities of, SoC bridge 202, and/or SoC bridge 112 (Fig. 1) may perform one or more operations of, and/or functionalities of, SoC bridge 204.

In some demonstrative aspects, as shown in Fig. 2, SoC bridge 202 may transmit the encapsulated MTPs to the SoC bridge 204 over a plurality of SB links, e.g., including three SB links.

In some demonstrative aspects, as shown in Fig. 2, SoC bridge 204 may maintain a plurality of RxQs corresponding to a plurality of RxQ-IDs, e.g., including a first RxQ-ID, e.g., RxQ-ID=0, a second RxQ-ID, e.g., RxQ-ID=1, and a third RxQ-ID, e.g., RxQ-ID=2.

In some demonstrative aspects, as shown in Fig. 2, SoC bridge 202 may transmit to SoC bridge a plurality of encapsulated MTPs including MTPs belonging to a single credit type, e.g., corresponding to a tuple of a VC and a response type.

In some demonstrative aspects, as shown in Fig. 2, the SoC 202 may buffer a MTPs, which may be received from a local management network.

In some demonstrative aspects, as shown in Fig. 2, the SoC 202 may transmit a first non-segmented MTP in two encapsulated MTPs, e.g., an encapsulated MTP 212 and an encapsulated MTP 214.

In some demonstrative aspects, as shown in Fig. 2, the SoC 202 may transmit all encapsulated MTPs of the same MTP, e.g., both encapsulated MTP 212 and encapsulated MTP 214, to a same first RxQ-ID, e.g., to the RxQ-ID=0.

In some demonstrative aspects, as shown in Fig. 2, the SoC 202 may increment the RxQ-ID by 1, e.g., to the RxQ-ID=1, an may transmit a subsequent encapsulated MTP 216, e.g., belonging to a subsequent MTP, to the RxQ-ID=1.

In some demonstrative aspects, as shown in Fig. 2, the SoC 202 may increment the RxQ-ID by 1, e.g., to the RxQ-ID=2, an may transmit a subsequent encapsulated MTP 218, e.g., belonging to a subsequent MTP, to the RxQ-ID=2.

In some demonstrative aspects, as shown in Fig. 2, the SoC 202 may wrap the RxQ-ID back to the first RxQ-ID, e.g., to the RxQ-ID=0, an may transmit a subsequent encapsulated MTP 220, e.g., belonging to a subsequent MTP, to the RxQ-ID=0.

In some demonstrative aspects, as shown in Fig. 2, the SoC 204 may buffer the encapsulated MTPs received from the SoC 202, for example, based on the RxQ-IDs assigned to the encapsulated MTPs. For example, the SoC 204 may identify the RxQ-ID of a received encapsulated MTP, for example, based on the RxQ-ID value in the header of the encapsulated MTP, e.g., as described above.

In some demonstrative aspects, as shown in Fig. 2, the SoC bridge 204 may service to a local management network all encapsulated MTPs of the same MTP, e.g., both encapsulated MTP 212 and encapsulated MTP 214, from a same first RxQ-ID, e.g., from the RxQ-ID=0.

In some demonstrative aspects, as shown in Fig. 2, the SoC 204 may increment the RxQ-ID by 1, e.g., to the RxQ-ID=1, an may service to the local management network a subsequent encapsulated MTP 216, e.g., belonging to a subsequent MTP, from the RxQ-ID=1.

In some demonstrative aspects, as shown in Fig. 2, the SoC 204 may increment the RxQ-ID by 1, e.g., to the RxQ-ID=2, an may service to the local management network a subsequent encapsulated MTP 218, e.g., belonging to a subsequent MTP, from the RxQ-ID=2.

In some demonstrative aspects, as shown in Fig. 2, the SoC 204 may wrap the RxQ-ID back to the first RxQ-ID, e.g., to the RxQ-ID=0, an may service to the local management network a subsequent encapsulated MTP 220, e.g., belonging to a subsequent MTP, from the RxQ-ID=0.

In some demonstrative aspects, as shown in Fig. 2, the SoC 202 and the SoC 204 may interleave the encapsulated MTPs across the three RxQ-IDs, for example, such that the SoC 204 may service the MTPs to the local management network, for example, according to a same order at which the MTPs are provided to the SoC 202.

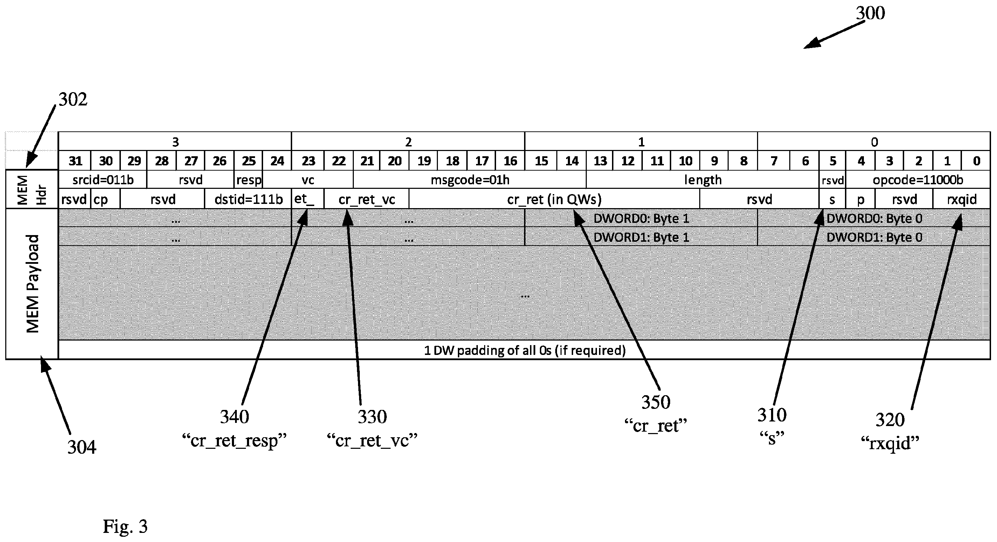

Reference is made to Fig. 3, which schematically illustrates a sideband encapsulated MTP format 300, in accordance with some demonstrative aspects.

For example, chiplet 110 (Fig. 1), chiplet 120 (Fig. 1), SoC 112 (Fig. 1), SoC 122 (Fig. 1), PHY 116 (Fig. 1), and/or PHY 126 (Fig. 1) may be configured to generate, process and/or communicate one or more encapsulated MTPs over a sideband link, for example, according to the sideband encapsulated MTP format 300.

For example, as shown in Fig. 3, the sideband encapsulated MTP format 300 may include a header 302 and an encapsulated MTP (MEM) payload 304.

For example, as shown in Fig. 3, the header 302 may include a bit 310 (s bit), which may be configured to indicate a segmented MTP. For example, the s bit 310 may be set, e.g., to 1, for example, for first and middle segments in a segmented MTP. For example, the s bit 310 be, e.g., 0, for example, for a last segment in a segmented MTP, or for an MTP that is not segmented.

For example, as shown in Fig. 3, the header 302 may include an RxQ-ID field 320, which may be configured to include an RxQ-ID value of an RxQ-ID to which the encapsulated MTP 300 is destined.

For example, as shown in Fig. 3, the header 302 may include a VC field (cr_ret_vc) 330, which may be configured to include a VC value, for example, to identify a VC.

For example, as shown in Fig. 3, the header 302 may include a request/response type (cr_ret_resp) field 340, which may be configured to include a request/response type value, for example, to identify a request/response type.

For example, as shown in Fig. 3, the header 302 may include a credit return (cr_ret) field 350, which may be configured to include a credit return value, for example, to identify a credit return to be assigned to the RxQ-ID for a credit path, which corresponds to the VC and the request/response type.

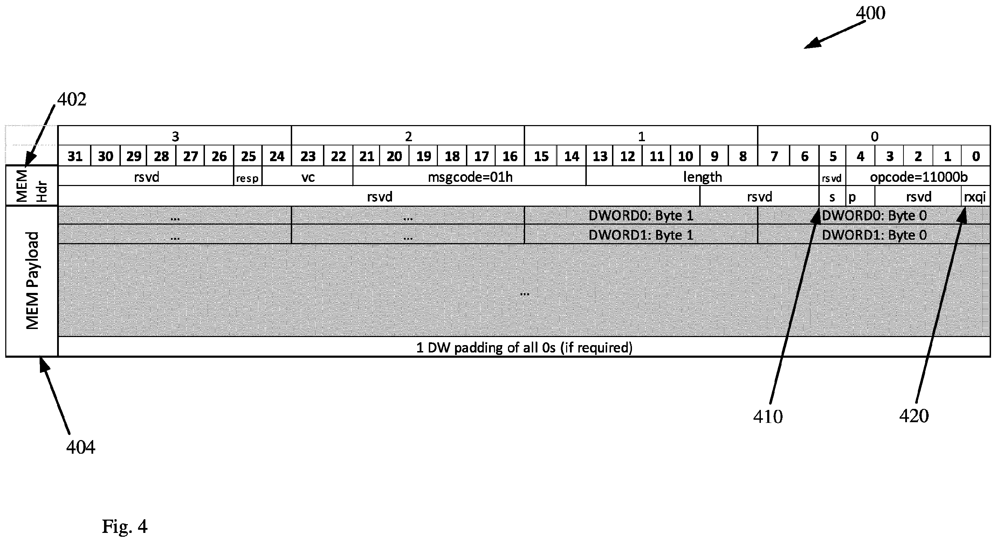

Reference is made to Fig. 4, which schematically illustrates a mainband encapsulated MTP format 400, in accordance with some demonstrative aspects.

For example, chiplet 110 (Fig. 1), chiplet 120 (Fig. 1), SoC 112 (Fig. 1), SoC 122 (Fig. 1), PHY 116 (Fig. 1), and/or PHY 126 (Fig. 1) may be configured to generate, process and/or communicate one or more encapsulated MTPs over a mainband link stack, for example, according to the mainband encapsulated MTP format 400.

For example, as shown in Fig. 4, the mainband encapsulated MTP format 400 may include a header 402 and an MTP payload 404.

For example, as shown in Fig. 4, the header 402 may include a bit 410 (s bit), which may be configured to indicate a segmented MTP. For example, the s bit 410 may be set, e.g., to 1, for example, for first and middle segments in a segmented MTP. For example, the s bit 410 be, e.g., 0, for example, for a last segment in a segmented MTP, or for an MTP that is not segmented.

For example, as shown in Fig. 4, the header 402 may include an RxQ-ID field 420, which may be configured to include an RxQ-ID value of an RxQ-ID to which the encapsulated MTP 400 is destined.

Referring back to Fig. 1, in some demonstrative aspects, chiplet 110 and chiplet 120 may be configured to negotiate a setup of a management transport protocol, for example, for communication of MTPs between the chiplet 110 and the chiplet 120, e.g., as described below.

In some demonstrative aspects, chiplet 110 and chiplet 120 may be configured to negotiate a configuration of the connection links 173 of the UCIe link 171, for example, for communication of MTPs between the chiplet 110 and the chiplet 120, e.g., as described below.

In some demonstrative aspects, chiplet 120 and chiplet 110 may be configured to exchange one or more messages, e.g., configuration messages, for example, to identify that extended sideband features are supported by the chiplet 120 and/or the chiplet 110, e.g., as described below.

In some demonstrative aspects, chiplet 120 may be configured to transmit to chiplet 110 one or more messages, e.g., configuration messages, which may be configured to indicate that extended sideband features are supported by the chiplet 120, e.g., as described below.

In some demonstrative aspects, chiplet 120 may be configured to transmit to chiplet 110 a configuration request (Req), e.g., in the form of a Mainband Initialization Parameter (MBINIT.PARAM) configuration request, which may include a field, e.g., in the form of a Sideband Feature Extensions (SBFE) supported bit, which may be set to indicate that extended sideband features are supported by the chiplet 120, e.g., as described below.

In some demonstrative aspects, chiplet 120 may be configured to transmit to chiplet 110 a configuration response (Res), e.g., in the form of an MBINIT.PARAM configuration response, which may include a field, e.g., an SBFE supported bit, which may be set to a predefined value, e.g., 1, for example, to indicate that extended sideband features are supported by the chiplet 120, e.g., as described below.

In some demonstrative aspects, chiplet 120 may be configured to transmit the configuration response to chiplet 110, e.g., in the form of the MBINIT.PARAM configuration response including the SBFE supported bit set to 1, for example, based on a determination that an MBINIT.PARAM request from the chiplet 110 includes the SBFE supported bit set to 1, e.g., as described below.

In some demonstrative aspects, chiplet 110 may be configured to transmit to chiplet 120 one or more messages, e.g., configuration messages, which may be configured to indicate that extended sideband features are supported by the chiplet 110, e.g., as described below.

In some demonstrative aspects, chiplet 110 may be configured to transmit to chiplet 120 a configuration request, e.g., in the form of an MBINIT.PARAM configuration request, which may include a field, e.g., in the form of an SBFE supported bit, which may be set to indicate that extended sideband features are supported by the chiplet 110, e.g., as described below.

In some demonstrative aspects, chiplet 110 may be configured to transmit to chiplet 120 a configuration response, e.g., in the form of an MBINIT.PARAM configuration response, which may include a field, e.g., an SBFE supported bit, which may be set to a predefined value, e.g., 1, for example, to indicate that extended sideband features are supported by the chiplet 110, e.g., as described below.

In some demonstrative aspects, chiplet 110 may be configured to transmit the configuration response to chiplet 120, e.g., in the form of the MBINIT.PARAM configuration response including the SBFE supported bit set to 1, for example, based on a determination that an MBINIT.PARAM request from the chiplet 120 includes the SBFE supported bit set to 1, e.g., as described below.

In some demonstrative aspects, chiplet 120 and chiplet 110 may be configured to exchange one or more messages, e.g., configuration messages, for example, to identify that management transport protocol for communication of the plurality of MTPs is supported by the chiplet 120 and/or the chiplet 110, e.g., as described below.

In some demonstrative aspects, chiplet 120 may be configured to transmit to chiplet 110 a request message, e.g., in the form of an MBINIT.PARAM SBFE request, which may be configured to include a predefined field set to a predefined value, e.g., a management transport protocol support bit set to 1, for example, to indicate support of the management transport protocol for communication of the plurality of MTPs by the chiplet 120, e.g., as described below.

In some demonstrative aspects, chiplet 120 may be configured to transmit to chiplet 110 a response message, e.g., in the form of an MBINIT.PARAM SBFE response, which may be configured to include a predefined field set to a predefined value, e.g., a management transport protocol support bit set to 1, for example, to indicate support of the management transport protocol for communication of the plurality of MTPs by the chiplet 120, e.g., as described below.

In some demonstrative aspects, chiplet 120 may be configured to transmit the response message to chiplet 110, e.g., in the form of the MBINIT.PARAM SBFE response including the management transport protocol support bit set to 1, for example, based on a determination that an MBINIT.PARAM SBFE request from the chiplet 110 includes the management transport protocol support bit set to 1, e.g., as described below.

In some demonstrative aspects, chiplet 110 may be configured to transmit to chiplet 120 a request message, e.g., in the form of an MBINIT.PARAM SBFE request, which may be configured to include a predefined field set to a predefined value, e.g., a management transport protocol support bit set to 1, for example, to indicate support of the management transport protocol for communication of the plurality of MTPs by the chiplet 110, e.g., as described below.

In some demonstrative aspects, chiplet 110 may be configured to transmit to chiplet 120 a response message, e.g., in the form of an MBINIT.PARAM SBFE response, which may be configured to include a predefined field set to a predefined value, e.g., a management transport protocol support bit set to 1, for example, to indicate support of the management transport protocol for communication of the plurality of MTPs by the chiplet 110, e.g., as described below.

In some demonstrative aspects, chiplet 110 may be configured to transmit the response message to chiplet 120, e.g., in the form of the MBINIT.PARAM SBFE response including the management transport protocol support bit set to 1, for example, based on a determination that an MBINIT.PARAM SBFE request from the chiplet 120 includes the management transport protocol support bit set to 1, e.g., as described below.

In some demonstrative aspects, chiplet 110 and chiplet 120 may be configured to negotiate a count of the connection links 173 of the UCIe link 171 to be used, for example, for communication of MTPs between the chiplet 110 and the chiplet 120, e.g., as described below.

In some demonstrative aspects, SoC bridge 122 may be configured to determine the count of the connection links 173 to be used for communication of MTPs between the chiplet 110 and the chiplet 120, for example, based on a count of local links and a count of remote links determined at the chiplet 120, e.g., as described below.

In some demonstrative aspects, SoC bridge 122 may be configured to determine the count of local links, for example, based on a count of completed MBINIT.PARAM SBFE message exchanges including an MBINIT.PARAM SBFE request transmitted by the chiplet 120, e.g., as described below.

In some demonstrative aspects, SoC bridge 122 may be configured to determine the count of remote links, for example, based on a count of completed MBINIT.PARAM SBFE message exchanges including an MBINIT.PARAM SBFE response transmitted by the chiplet 120, e.g., as described below.

In some demonstrative aspects, SoC bridge 122 may be configured to determine the count of the connection links 173 to be used for communication of MTPs between the chiplet 110 and the chiplet 120, for example, such that the count of the connection links 173 is to be not more than a minimum of the count of local links and the count of remote links determined at the chiplet 120, e.g., as described below.

In some demonstrative aspects, SoC bridge 112 may be configured to determine the count of the connection links 173 to be used for communication of MTPs between the chiplet 110 and the chiplet 120, for example, based on a count of local links and a count of remote links determined at the chiplet 110, e.g., as described below.

In some demonstrative aspects, SoC bridge 112 may be configured to determine the count of local links, for example, based on a count of completed MBINIT.PARAM SBFE message exchanges including an MBINIT.PARAM SBFE request transmitted by the chiplet 110, e.g., as described below.

In some demonstrative aspects, SoC bridge 112 may be configured to determine the count of remote links, for example, based on a count of completed MBINIT.PARAM SBFE message exchanges including an MBINIT.PARAM SBFE response transmitted by the chiplet 110, e.g., as described below.

In some demonstrative aspects, SoC bridge 112 may be configured to determine the count of the connection links 173 to be used for communication of MTPs between the chiplet 110 and the chiplet 120, for example, such that the count of the connection links 173 is to be not more than a minimum of the count of local links and the count of remote links determined at the chiplet 110, e.g., as described below.

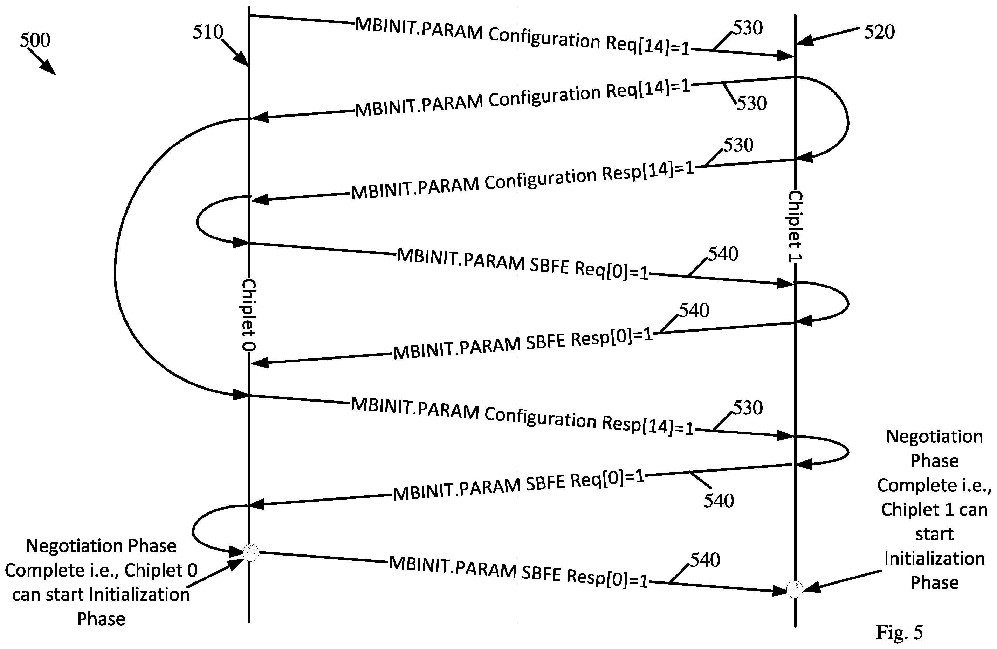

Reference is made to Fig. 5, which schematically illustrates a management transport path negotiation 500 between a first chiplet (chiplet 0) 510 and a second chiplet (chiplet 1) 520, in accordance with some demonstrative aspects.

For example, chiplet 110 (Fig. 1) may perform one or more operations and/or functionalities of the chiplet 510, and/or chiplet 120 (Fig. 1) may perform one or more operations and/or functionalities of the chiplet 520.

In some demonstrative aspects, the chiplet 510 and the chiplet 520 may utilize the management transport path negotiation 500 to perform negotiation of a number of sideband links, e.g., a number of RxQs, over which management packets can be sent/received.

In some demonstrative aspects, the chiplet 510 and the chiplet 520 may utilize the management transport path negotiation 500, for example, during link initialization in an MBINIT.PARAM stage, e.g., as described below.

In some demonstrative aspects, as shown in Fig. 5, chiplet 510 and chiplet 520 may be configured to exchange during the management transport path negotiation 500 a plurality of MBINIT.PARAM configuration messages 530, for example, to identify that extended sideband features are supported by the chiplet 510 and/or the chiplet 520, e.g., as described below.

In some demonstrative aspects, as shown in Fig. 5, chiplet 510 and chiplet 520 may be configured to exchange during the management transport path negotiation 500 a plurality of MBINIT.PARAM SBFE messages 540, for example, to identify that a management transport protocol for communication of MTPs is supported by the chiplet 510 and/or the chiplet 520, e.g., as described below.

In some demonstrative aspects, chiplet 510 and chiplet 520 may be configured to set a "Sideband Feature Extensions (SBFE) Supported" bit in a {MBINIT.PARAM Configuration Req} message, for example, during MBINIT.PARAM state of link training. For example, chiplet 510 and chiplet 520 may be configured to set the SBFE Supported bit in a {MBINIT.PARAM Configuration Req} message, for example, to indicate support for extended sideband features, which may include the management transport protocol.

In some demonstrative aspects, it may be defined that the SBFE Supported bit with the value 0b may indicate that sideband feature extensions are not supported.

In some demonstrative aspects, it may be defined that the SBFE Supported bit with the value 1b may indicate that sideband feature extensions are supported.

In some demonstrative aspects, it may be defined that all modules in a multi-module design must have the same value for this SBFE Supported bit in the {MBINIT.PARAM Configuration Req} message, e.g., the same SBFE Supported bit setting should be applied to all {MBINIT.PARAM Configuration Req} messages from all modules of a chiplet.

In some demonstrative aspects, it may be defined that a remote link partner, if it supports sideband feature extensions and it received the {MBINIT.PARAM Configuration Req} with the SBFE bit as set, will set the SBFE bit in the {MBINIT.PARAM Configuration Resp} message it sends out, else the bit is 0b in the MBINIT.PARAM Configuration Resp} message.

For example, chiplet 510 may set the SBFE bit to 1b in an {MBINIT.PARAM Configuration Resp} message sent by the chiplet 510, for example, in case chiplet 510 supports the sideband feature extensions, and chiplet 510 has received from chiplet 520 an {MBINIT.PARAM Configuration Req} with the SBFE bit set to 1b.

For example, chiplet 520 may set the SBFE bit to 1b in an {MBINIT.PARAM Configuration Resp} message sent by the chiplet 510, for example, in case chiplet 520 supports the sideband feature extensions, and chiplet 520 has received from chiplet 510 an {MBINIT.PARAM Configuration Req} with the SBFE bit set to 1b.

In some demonstrative aspects, it may be defined that all modules in a multi-module design must have the same value for this SBFE Supported bit in the response (Resp) message, e.g., the same SBFE Supported bit setting should be applied to all {MBINIT.PARAM Configuration Resp} messages from all modules of a chiplet.

In some demonstrative aspects, it may be defined that if the SBFE bit in {MBINIT.PARAM Configuration Resp} is received as 1b across all modules of a chiplet, the chiplet then negotiates next level of details of extended sideband features supported with the remote link partner.

In some demonstrative aspects, it may be defined that if the SBFE bit in {MBINIT.PARAM Configuration Resp} is received as 0b in any module of a chiplet, then the chiplet exits an MBINIT.PARAM state.

For example, chiplet 510 may decide to negotiate the next level of details of the extended sideband features supported with the chiplet 520, for example, based on a determination that the SBFE bit in {MBINIT.PARAM Configuration Resp} is received as 1b across all modules of chiplet 510.

For example, chiplet 520 may decide to negotiate the next level of details of the extended sideband features supported with the chiplet 510, for example, based on a determination that the SBFE bit in {MBINIT.PARAM Configuration Resp} is received as 1b across all modules of chiplet 520.

In some demonstrative aspects, as shown in Fig. 5, the negotiation of the next level of details of the extended sideband features supported may include an exchange of messages for a handshake between the chiplet 510 and the chiplet 520 regarding the support of the management transport protocol.

In some demonstrative aspects, as shown in Fig. 5, a {MBINIT.PARAM SBFE Req} message is sent from a chiplet to the remote link partner, e.g., on all modules.

In some demonstrative aspects, as shown in Fig. 5, the remote link partner then sends back a {MBINIT.PARAM SBFE Resp} message.

In some demonstrative aspects, it may be defined that this handshake happens independently in each direction, e.g., from chiplet 510 to chiplet 520, and from chiplet 520 to chiplet 510.

In some demonstrative aspects, it may be defined that an SBFE Req[0]/Resp[0] setting (also referred to as "MTP bit") is to indicate support for transmission/reception of management encapsulation messages.

In some demonstrative aspects, it may be defined that a remote link partner must set the MTP bit in the SBFE Resp message if the MTP bit was set in the Request message, and it supports receiving corresponding messages, e.g., MEMs.

For example, chiplet 510 may be configured to set the MTP bit in the SBFE Resp message transmitted by chiplet 510, for example, if the MTP bit was set in the Request message received from the chiplet 520, and the chiplet 510 supports receiving MEMs.

For example, chiplet 520 may be configured to set the MTP bit in the SBFE Resp message transmitted by chiplet 520, for example, if the MTP bit was set in the Request message received from the chiplet 510, and the chiplet 520 supports receiving MEMs.

In some demonstrative aspects, it may be defined that when negotiating SBFE, a chiplet must advertise SBFE support on both Req and Resp messages, or to advertise no SBFE support on both Req and Resp messages.

For example, chiplet 510 may be configured to set the MTP bit in both the SBFE Req message and the SBFE Resp message transmitted by chiplet 510.

For example, chiplet 520 may be configured to set the MTP bit in both the SBFE Req message and the SBFE Resp message transmitted by chiplet 520.

In some demonstrative aspects, it may be defined that for a multi-module UCIe Link, the negotiation is done independently per module.

For example, it may be defined that a PHY implementation may be allowed to advertise the MTP bit in the SBFE Req message, for example, only on a subset of the modules, e.g., while one or more other modules may be allowed to transmit the SBFE Req message with the MTP bit not set.

In some demonstrative aspects, it may be defined that once {MBINIT.PARAM SBFE.Req} transmit to remote link partner and {MBINIT.PARAM SBFE.Resp} receive from remote link partner completes (successfully or not) during MBINIT.PARAM across all modules, the negotiated local link count with MTP set/received is the value RxQ-L.

For example, chiplet 510 may determine the value RxQ-L for the local ink count at chiplet 510, for example, based on a count of links for which an {MBINIT.PARAM SBFE.Req} message was transmitted by chiplet 510 and an {MBINIT.PARAM SBFE.Resp} message from chiplet 520 was received by chiplet 510.

For example, chiplet 520 may determine the value RxQ-L for the local ink count at chiplet 520, for example, based on a count of links for which an {MBINIT.PARAM SBFE.Req} message was transmitted by chiplet 520 and an {MBINIT.PARAM SBFE.Resp} message from chiplet 510 was received by chiplet 520.

In some demonstrative aspects, it may be defined that once {MBINIT.PARAM SBFE.Req} received from remote link partner and {MBINIT.PARAM SBFE.Resp} transmit to remote link partner completes during MBINIT.PARAM across all modules, the link count with MTP received/set is the value RxQ-R.

For example, chiplet 510 may determine the value RxQ-R for the remote ink count at chiplet 510, for example, based on a count of links for which an {MBINIT.PARAM SBFE.Resp} message from chiplet 520 was received by chiplet 510 and an {MBINIT.PARAM SBFE.Req} message was transmitted by chiplet 510.

For example, chiplet 520 may determine the value RxQ-R for the remote ink count at chiplet 520, for example, based on a count of links for which an {MBINIT.PARAM SBFE.Resp} message from chiplet 510 was received by chiplet 520 and an {MBINIT.PARAM SBFE.Req} message was transmitted by chiplet 520.

In some demonstrative aspects, the total number of RxQ-IDs to be used by a chiplet for management packet transmission may be set as the minimum of the value RxQ-L and the value RxQ-R, e.g., MIN{RxQ-L, RxQ-R}.

In some demonstrative aspects, a chiplet, e.g., the chiplet 510 and/or the chiplet 520, may be configured to negotiate support for the management transport protocol over a mainband link stack, e.g., in a similar manner to the negotiation described above with respect to the sideband links.

For example, on the mainband, a UCIe stack, e.g., each UCIe stack, may negotiate support for management transport, for example, via a dedicated bit, e.g., an MTP bit, which may be communicated, for example, in AdvCap.messages and/or FinCap.Adapter messages.

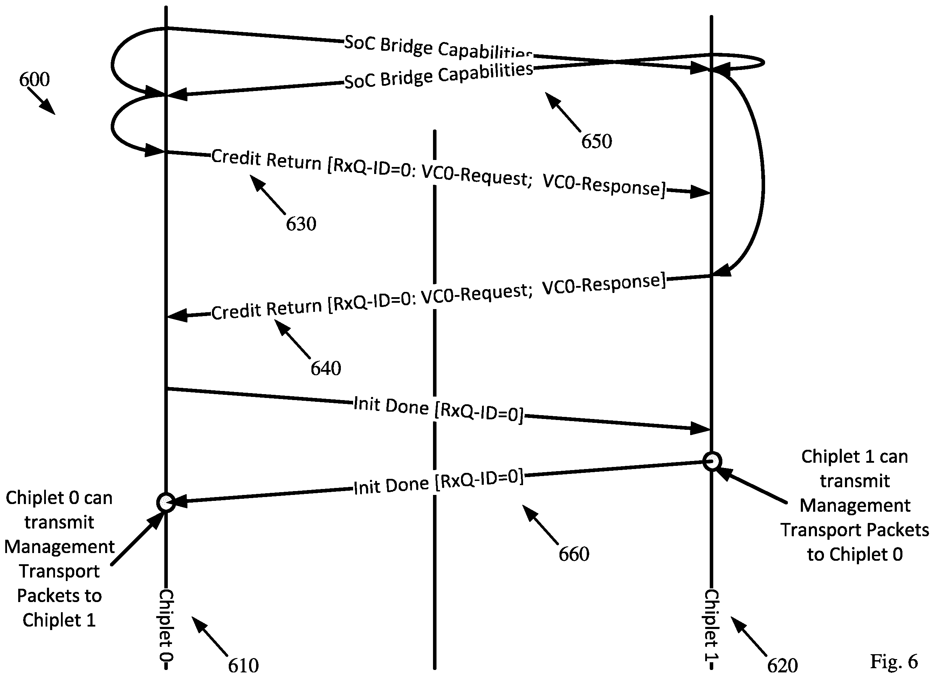

Reference is made to Fig. 6, which schematically illustrates a management transport path initialization 600 between a first chiplet (chiplet 0) 610 and a second chiplet (chiplet 1) 620, in accordance with some demonstrative aspects.

For example, chiplet 110 (Fig. 1) may perform one or more operations and/or functionalities of the chiplet 610, and/or chiplet 120 (Fig. 1) may perform one or more operations and/or functionalities of the chiplet 620.

In some demonstrative aspects, the chiplet 610 and the chiplet 620 may utilize the management transport path initialization 600, for example, based on successful negotiation of the management transport path, e.g., as described above.

In some demonstrative aspects, the chiplet 610 and the chiplet 620 may utilize the management transport path initialization 600 for example, to initialize the RxQs, e.g., before packets can be sent to any of them.

In some demonstrative aspects, as shown in Fig. 6, the chiplet 610 and the chiplet 620 may exchange SoC bridge capabilities messages 650 to exchange information regarding capabilities of the SoC bridge implemented by chiplet 610 and the SoC bridge implemented by chiplet 620.

For example, the SoC bridge implemented by chiplet 610 may transmit to chiplet 620 a first SoC bridge capabilities message 650 including a field (numVC) configured to indicate a number of VCs supported by the SoC bridge implemented by chiplet 610.

For example, the SoC bridge implemented by chiplet 620 may transmit to chiplet 610 a second SoC bridge capabilities message 650 including a field (numVC) configured to indicate a number of VCs supported by the SoC bridge implemented by chiplet 620.

In some demonstrative aspects, it may be defined, for example, that an RxQ, e.g., each RxQ, sends its credit value for a credit type, e.g., for each credit type.

In some demonstrative aspects, it may be defined that initialization is complete and management transport packets can flow, for example, when the operation of sending the credit values for an RxQ is completed over the number of RxQs to be used, e.g., across MIN{RxQ-L, RxQ-R} RxQs.

In some demonstrative aspects, it may be defined that an SoC of a chiplet is to send credit return messages for each enabled VC for each type (requests and responses), across all enabled RxQ-IDs.

For example, as shown in Fig. 6, the SoC bridge of chiplet 610 may send credit return messages 630, for example, for each enabled VC for each type (requests and responses), across all enabled RxQ-IDs.

For example, as shown in Fig. 6, the SoC bridge of chiplet 620 may send credit return messages 640, for example, for each enabled VC for each type (requests and responses), across all enabled RxQ-IDs.

In some demonstrative aspects, as shown in Fig. 6, the chiplet 610 and the chiplet 620 may exchange initialization done (Init Done) messages 660 to indicate completion of the management transport path initialization 600.

For example, the exchange of messages shown in Fig. 6 relates to a case where there is only one RxQ negotiated.

For example, in case there are more than one RxQs in the design, the same flow has to be completed across all the RxQ paths, for example, before management transport packets can flow.

For example, the flow shown In Fig. 6 may be common for the sideband and mainband.

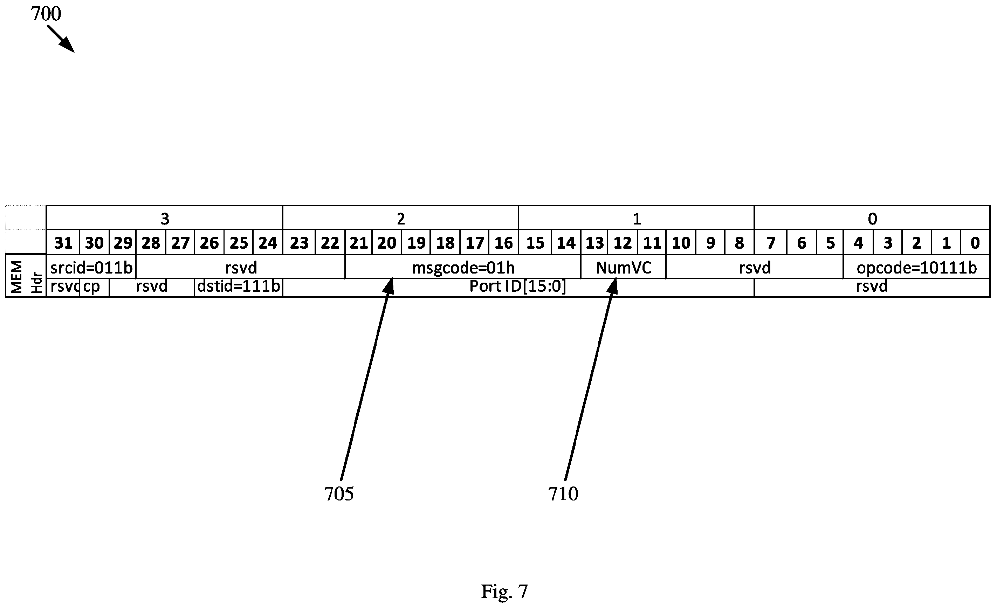

Reference is made to Fig. 7, which schematically illustrates a sideband SoC bridge capabilities message format 700, in accordance with some demonstrative aspects.

For example, chiplet 110 (Fig. 1), chiplet 120 (Fig. 1), SoC 112 (Fig. 1), SoC 122 (Fig. 1), PHY 116 (Fig. 1), and/or PHY 126 (Fig. 1) may be configured to generate, process and/or communicate one or more SoC Bridge Capabilities messages over a sideband link, for example, according to the sideband SoC bridge capabilities message format 700.

For example, bridge capabilities messages 650 (Fig. 6) may be configured to include one or more fields according to sideband SoC bridge capabilities message format 700.

For example, as shown in Fig. 7, the sideband SoC bridge capabilities message format 700 may include a header (MEM Hdr), e.g., without a data message.

For example, as shown in Fig. 7, the MEM header of the sideband SoC bridge capabilities message format 700 may include a message code (msgcode) field 705, which may be configured to include a predefined msgcode value, e.g., msgcode=01h, to identify that a MEM including the msgcode field 705 includes a sideband SoC bridge capabilities message.

For example, as shown in Fig. 7, the MEM header of the sideband SoC bridge capabilities message format 700 may include a field (NumVC) 710, which may be configure to include a NumVC value to indicate a number of VCs supported by the SoC bridge transmitting the SoC bridge capabilities message.

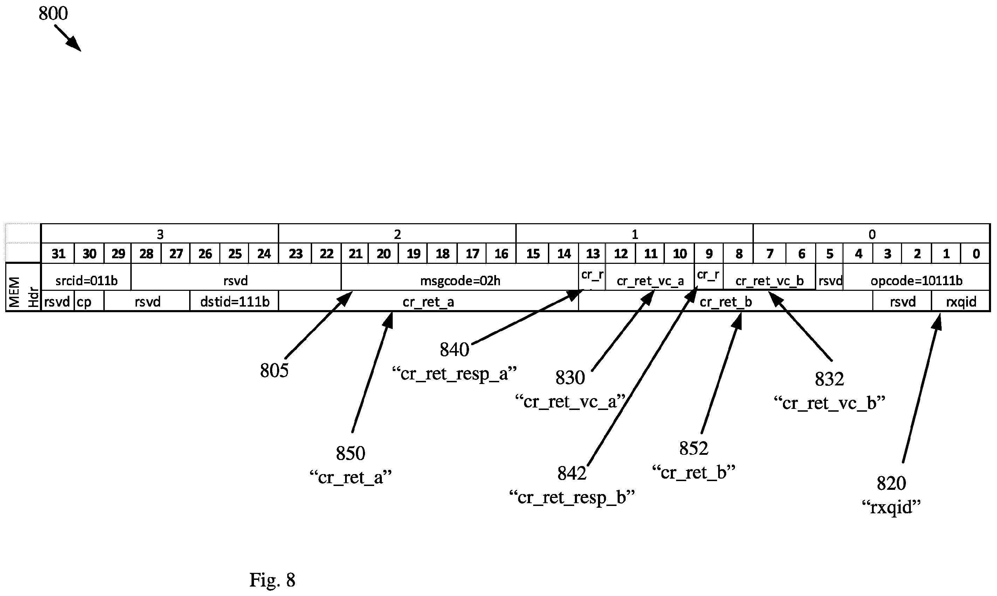

Reference is made to Fig. 8, which schematically illustrates a sideband credit return message format 800, in accordance with some demonstrative aspects.

For example, chiplet 110 (Fig. 1), chiplet 120 (Fig. 1), SoC 112 (Fig. 1), SoC 122 (Fig. 1), PHY 116 (Fig. 1), and/or PHY 126 (Fig. 1) may be configured to generate, process and/or communicate one or more credit return messages over a sideband link, for example, according to the sideband credit return message format 800.

For example, credit return message 630 (Fig. 6) and/or credit return message 640 (Fig. 6) may be configured to include one or more fields according to sideband credit return message format 800.

For example, as shown in Fig. 8, the sideband credit return message format 800 may include a header (MEM Hdr), e.g., without a data message.

For example, as shown in Fig. 8, the MEM header of the sideband credit return message format 800 may include a message code (msgcode) field 805, which may be configured to include a predefined msgcode value, e.g., msgcode=02h, to identify that a MEM including the msgcode field 805 includes a sideband credit return message.

For example, as shown in Fig. 8, the MEM header of the sideband credit return message format 800 may include an RxQ-ID field 820, which may be configured to include an RxQ-ID value of an RxQ-ID of an RxQ to which the sideband credit return message belongs.

For example, as shown in Fig. 8, the MEM header of the sideband credit return message format 800 may include a first VC field (cr_ret_vc_a) 830, which may be configured to include a first VC value, for example, to identify a first VC.

For example, as shown in Fig. 8, the MEM header of the sideband credit return message format 800 may include a second VC field (cr_ret_vc_b) 832, which may be configured to include a second VC value, for example, to identify a second VC.

For example, as shown in Fig. 8, the MEM header of the sideband credit return message format 800 may include a first request/response type (cr_ret_resp_a) field 840, which may be configured to include a first request/response type value, for example, to identify a first request/response type.

For example, as shown in Fig. 8, the MEM header of the sideband credit return message format 800 may include a second request/response type (cr_ret_resp_b) field 842, which may be configured to include a second request/response type value, for example, to identify a second request/response type.

For example, as shown in Fig. 8, the MEM header of the sideband credit return message format 800 may include a first credit return (cr_ret_a) field 850, which may be configured to include a first credit return value, for example, to identify a first credit return to be assigned to the RxQ-ID for a first credit path, which corresponds to the first VC and the first request/response type.

For example, as shown in Fig. 8, the MEM header of the sideband credit return message format 800 may include a second credit return (cr_ret_b) field 852, which may be configured to include a second credit return value, for example, to identify a second credit return to be assigned to the RxQ-ID for a second credit path, which corresponds to the second VC and the second request/response type.

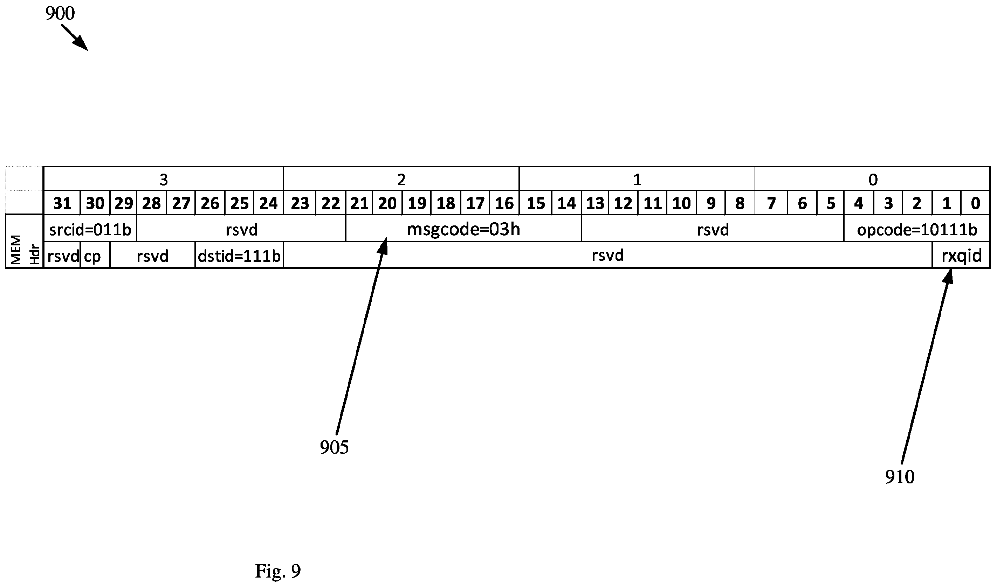

Reference is made to Fig. 9, which schematically illustrates a sideband initialization (Init) done message format 900, in accordance with some demonstrative aspects.

For example, chiplet 110 (Fig. 1), chiplet 120 (Fig. 1), SoC 112 (Fig. 1), SoC 122 (Fig. 1), PHY 116 (Fig. 1), and/or PHY 126 (Fig. 1) may be configured to generate, process and/or communicate one or more initialization done messages over a sideband link, for example, according to the sideband initialization (Init) done message format 900.

For example, initialization (Init) done messages 660 (Fig. 6) may be configured to include one or more fields according to sideband initialization (Init) done message format 900.

For example, as shown in Fig. 9, the sideband initialization (Init) done message format 900 may include a header (MEM Hdr), e.g., without a data message.

For example, as shown in Fig. 9, the MEM header of the sideband initialization (Init) done message format 900 may include a message code (msgcode) field 905, which may be configured to include a predefined msgcode value, e.g., msgcode=03h, to identify that a MEM including the msgcode field 905 includes a sideband initialization (Init) done message.

For example, as shown in Fig. 9, the MEM header of the sideband initialization (Init) done message format 900 may include an RxQ-ID field 910, which may be configured to include an RxQ-ID value of an RxQ-ID of an RxQ to which the initialization (Init) done message belongs.

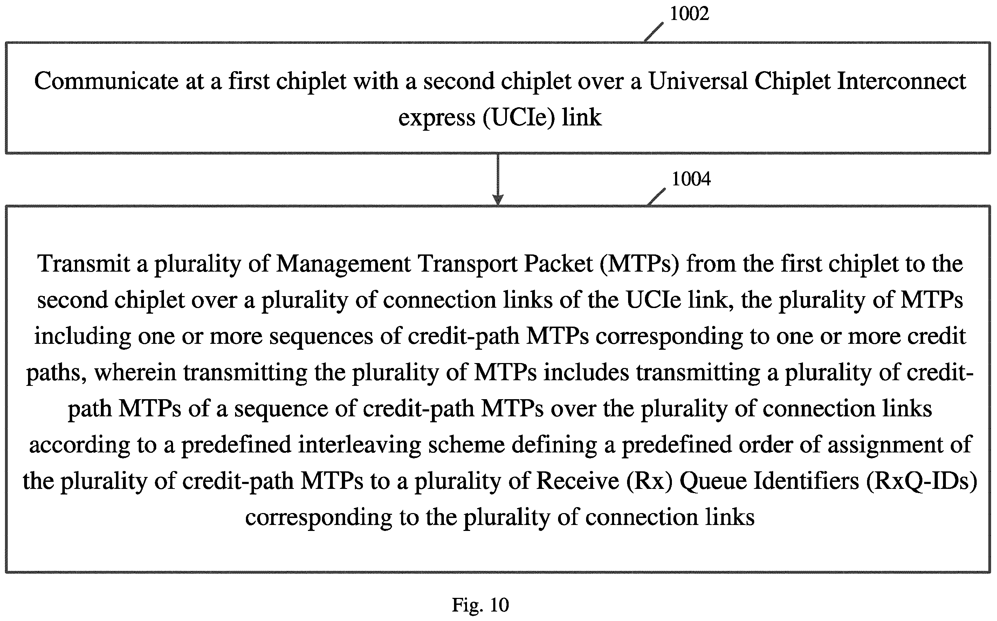

Reference is made to Fig. 10, which schematically illustrates a method of communicating MTPs over a UCIe link, in accordance with some demonstrative aspects. For example, one or more of the operations of the method of Fig. 10 may be performed by one or more elements of a system, e.g., SOC package 100 (Fig. 1), for example, one or more chiplets, e.g., chiplet 110 (Fig. 1), and/or chiplet 120 (Fig. 1), an SoC bridge, e.g., SoC bridge 112 (Fig. 1) and/or SoC bridge 122 (Fig. 1), and/or a PHY, e.g., PHY 116 (Fig. 1) and/or PHY 126 (Fig. 1).

As indicated at block 1002, the method may include communicating at a first chiplet with a second chiplet over a UCIe link. For example, PHY 126 (Fig. 1) may be configured to communicate with chiplet 110 (Fig. 1) via the UCIe link 171 (Fig. 1), e.g., as described above.

As indicated at block 1004, the method may include transmitting a plurality of MTPs from the first chiplet to the second chiplet over a plurality of connection links of the UCIe link. For example, the plurality of MTPs may include one or more sequences of credit-path MTPs corresponding to one or more credit paths. For example, transmitting the plurality of MTPs may include transmitting a plurality of credit-path MTPs of a sequence of credit-path MTPs over the plurality of connection links according to a predefined interleaving scheme defining a predefined order of assignment of the plurality of credit-path MTPs to a plurality of RxQ-IDs corresponding to the plurality of connection links. For example, SoC bridge 122 (Fig. 1) may be configured to transmit the plurality of MTPs over the plurality of connection links 173 (Fig. 1), e.g., as described above.

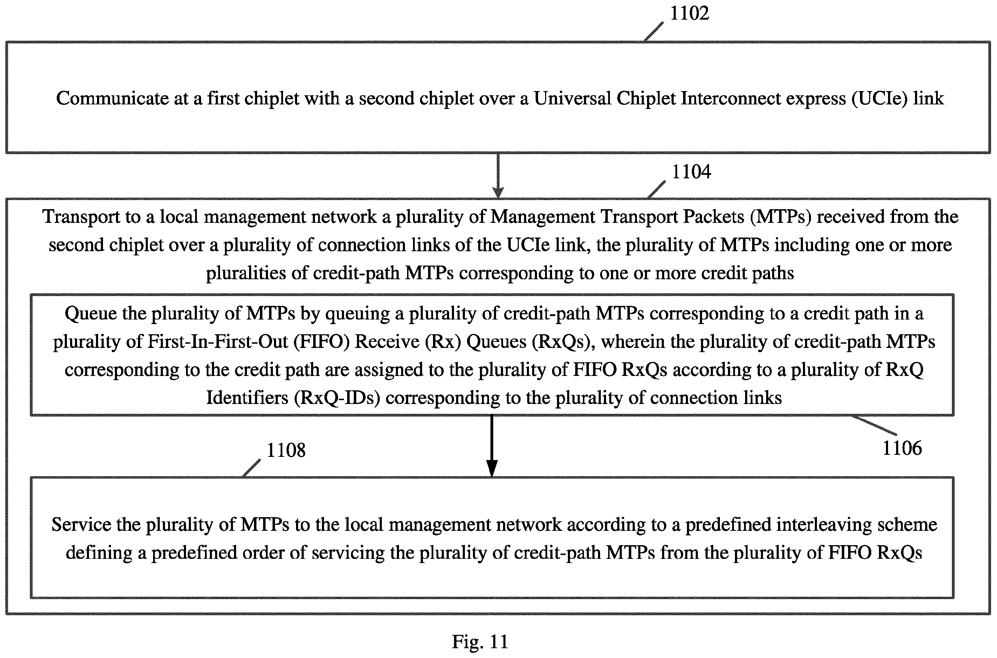

Reference is made to Fig. 11, which schematically illustrates a method of communicating MTPs over a UCIe link, in accordance with some demonstrative aspects. For example, one or more of the operations of the method of Fig. 11 may be performed by one or more elements of a system, e.g., SOC package 100 (Fig. 1), for example, one or more chiplets, e.g., chiplet 110 (Fig. 1), and/or chiplet 120 (Fig. 1), an SoC bridge, e.g., SoC bridge 112 (Fig. 1) and/or SoC bridge 122 (Fig. 1), and/or a PHY, e.g., PHY 116 (Fig. 1) and/or PHY 126 (Fig. 1).

As indicated at block 1102, the method may include communicating at a first chiplet with a second chiplet over a UCIe link. For example, PHY 116 (Fig. 1) may be configured to communicate with chiplet 120 (Fig. 1) via the UCIe link 171 (Fig. 1), e.g., as described above.

As indicated at block 1104, the method may include transporting to a local management network a plurality of MTPs received from the second chiplet over a plurality of connection links of the UCIe link. For example, the plurality of MTPs may include one or more pluralities of credit-path MTPs corresponding to one or more credit paths. For example SoC bridge 112 (Fig. 1) may be configured to transport to the local management network 130 (Fig. 1) the plurality of MTPs received from the chiplet 120 (Fig. 1) over the plurality of connection links 173 (Fig. 1) of the UCIe link 171 (Fig. 1), e.g., as described above.

As indicated at block 1106, the method may include queuing the plurality of MTPs by queuing a plurality of credit-path MTPs corresponding to a credit path in a plurality of FIFO RxQs. For example, the plurality of credit-path MTPs corresponding to the credit path may be assigned to the plurality of FIFO RxQs according to a plurality of RxQ-IDs corresponding to the plurality of connection links. For example, SoC bridge 112 (Fig. 1) may be configured to queue the plurality of MTPs in the plurality of FIFO RxQs, e.g., as described above.

As indicated at block 1108, the method may include servicing the plurality of MTPs to the local management network, for example, according to a predefined interleaving scheme defining a predefined order of servicing the plurality of credit-path MTPs from the plurality of FIFO RxQs. For example, SoC bridge 112 (Fig. 1) may be configured to service the plurality of MTPs to the local management network 130 (Fig. 1), for example, according to the predefined interleaving scheme, e.g., as described above.

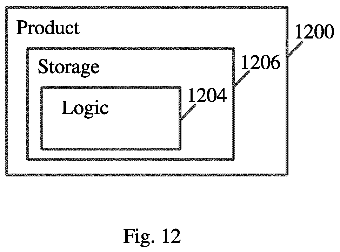

Reference is made to Fig. 12, which schematically illustrates a product of manufacture 1200, in accordance with some demonstrative aspects. Product 1200 may include one or more tangible computer-readable ("machine-readable") non-transitory storage media 1202, which may include instructions, e.g., implemented by logic 1204, operable to, when executed by at least one processor, enable the at least one processor to perform, trigger and/or implement one or more operations and/or functionalities described with reference to the Figs. 1-11, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1200 and/or machine readable storage media 1202 may include one or more types of computer-readable storage media capable of storing data, including volatile memory, non-volatile memory, removable or non-removable memory, erasable or non-erasable memory, writeable or re-writeable memory, and the like. For example, machine readable storage media 1202 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1204 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1204 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, machine code, and the like.

### EXAMPLES

The following examples pertain to further aspects.

Example 1 includes an apparatus comprising an Integrated Circuit (IC), e.g., a chiplet, comprising Physical layer (PHY) circuitry to communicate with an other IC, e.g., an other chiplet, over a Universal Chiplet Interconnect Express (UCIe) link; and a System on Chip (SoC) bridge configured to transmit a plurality of Management Transport Packets (MTPs) to the other IC over a plurality of connection links of the UCIe link, the plurality of MTPs comprising one or more sequences of credit-path MTPs corresponding to one or more credit paths, the SoC bridge configured to transmit a plurality of credit-path MTPs of a sequence of credit-path MTPs over the plurality of connection links according to a predefined interleaving scheme defining a predefined order of assignment of the plurality of credit-path MTPs to a plurality of Receive (Rx) Queue Identifiers (RxQ-IDs) corresponding to the plurality of connection links.

Example 2 includes the subject matter of Example 1, and optionally, wherein the SoC bridge is configured to assign a first credit-path MTP of the plurality of credit-path MTPs to a first RxQ-ID, and to assign a second credit-path MTP, which is subsequent to the first credit-path MTP in the sequence of credit-path MTPs, to a second RxQ-ID, which is subsequent to the first RxQ-ID in the plurality of RxQ-IDs.

Example 3 includes the subject matter of Example 1 or 2, and optionally, wherein the SoC bridge is configured to set an RxQ-ID value to an initial RxQ-ID value; assign a first-in-order credit-path MTP of the sequence of credit-path MTPs to an initial RxQ-ID corresponding to the initial RxQ-ID value; determine an incremented RxQ-ID value by incrementing the RxQ-ID value by one; assign a next-in-order credit-path MTP of the sequence of credit-path MTPs to an RxQ-ID corresponding to the incremented RxQ-ID value; and repeat determining the incremented RxQ-ID value and assigning the next-in-order credit-path MTP to the RxQ-ID corresponding to the incremented RxQ-ID value, while wrapping around to the initial RxQ-ID value when reaching a maximal RxQ-ID value, the maximal RxQ-ID value based on a count of the plurality of RxQ-IDs.

Example 4 includes the subject matter of any one of Examples 1-3, and optionally, wherein the SoC bridge is configured to, based on a determination that a credit-path MTP is to be transmitted as a segmented credit-path MTP, transmit a plurality of segments of the segmented credit-path MTP in a plurality of encapsulated MTPs assigned to the plurality of RxQ-IDs according to the interleaving scheme.

Example 5 includes the subject matter of Example 4, and optionally, wherein the SoC bridge is configured to set a segmentation-indication bit (s bit) to 1 in a header of each of the plurality of encapsulated MTPs except for a last encapsulated MTP of the plurality of encapsulated MTPs.

Example 6 includes the subject matter of Example 4 or 5, and optionally, wherein the SoC bridge is configured to ensure that no other encapsulated MTP, which does not belong to the segmented credit-path MTP, and which belongs to a same credit path as the segmented credit-path MTP, is to be interleaved over the plurality of RxQ-IDs before completing assignment of the plurality of encapsulated MTPs to the plurality of RxQ-IDs.

Example 7 includes the subject matter of any one of Examples 1-6, and optionally, wherein the SoC bridge is configured to, based on a determination that a credit-path MTP is to be transmitted as a non-segmented credit-path MTP, transmit an entirety of the non-segmented credit-path MTP by assigning any encapsulated MTPs of the non-segmented credit-path MTP to a same single RxQ-ID.

Example 8 includes the subject matter of any one of Examples 1-7, and optionally, wherein the SoC bridge is configured to transmit a first plurality of credit-path MTPs in a first sequence of credit-path MTPs over the plurality of connection links by assigning the first plurality of credit-path MTPs to the plurality of RxQ-IDs according to the predefined interleaving scheme; and transmit a second plurality of credit-path MTPs in a second sequence of credit-path MTPs over the plurality of connection links by assigning the second plurality of credit-path MTPs to the plurality of RxQ-IDs according to the predefined interleaving scheme.

Example 9 includes the subject matter of Example 8, and optionally, wherein the SoC bridge is configured to assign the second plurality of credit-path MTPs to the plurality of RxQ-IDs independently from the assigning of the first plurality of credit-path MTPs to the plurality of RxQ-IDs.

Example 10 includes the subject matter of any one of Examples 1-9, and optionally, wherein the SoC bridge is configured to set an RxQ-ID field in a header of a credit-path MTP to an RxQ-ID to which the credit-path MTP is assigned.

Example 11 includes the subject matter of any one of Examples 1-10, and optionally, wherein the IC, e.g., chiplet, is configured to negotiate a count of the plurality of connection links with the other IC, e.g., chiplet.

Example 12 includes the subject matter of any one of Examples 1-11, and optionally, wherein the IC, e.g., chiplet, is configured to transmit to the other IC, e.g., chiplet, a Mainband Initialization Parameter (MBINIT.PARAM) configuration request comprising a Sideband Feature Extensions (SBFE) supported bit to indicate that extended sideband features are supported.

Example 13 includes the subject matter of any one of Examples 1-12, and optionally, wherein the IC, e.g., chiplet, is configured to transmit to the other IC, e.g., chiplet, a Mainband Initialization Parameter (MBINIT.PARAM) configuration response comprising a Sideband Feature Extensions (SBFE) supported bit set to 1 to indicate that extended sideband features are supported.

Example 14 includes the subject matter of Example 13, and optionally, wherein the IC, e.g., chiplet, is configured to transmit the MBINIT.PARAM response comprising the SBFE supported bit set to 1, based on a determination that an MBINIT.PARAM request from the other IC, e.g., chiplet, comprises the SBFE supported bit set to 1.

Example 15 includes the subject matter of any one of Examples 1-14, and optionally, wherein the IC, e.g., chiplet, is configured to transmit to the other IC, e.g., chiplet, a Mainband Initialization Parameter (MBINIT.PARAM) Sideband Feature Extensions (SBFE) request comprising a management transport protocol support bit set to 1 to indicate support of a management transport protocol for communication of the plurality of MTPs.

Example 16 includes the subject matter of any one of Examples 1-14, and optionally, wherein the IC, e.g., chiplet, is configured to transmit to the other IC, e.g., chiplet, a Mainband Initialization Parameter (MBINIT.PARAM) Sideband Feature Extensions (SBFE) response comprising a management transport protocol support bit set to 1 to indicate support of a management transport protocol for communication of the plurality of MTPs.

Example 17 includes the subject matter of Example 16, and optionally, wherein the IC, e.g., chiplet, is configured to transmit the MBINIT.PARAM SBFE response comprising the management transport protocol support bit set to 1, based on a determination that an MBINIT.PARAM SBFE request from the other IC, e.g., chiplet, comprises the management transport protocol support bit set to 1.

Example 18 includes the subject matter of any one of Examples 1-17, and optionally, wherein the SoC bridge is configured to determine a count of the plurality of connection links based on a count of local links and a count of remote links, wherein the count of local links is based on a count of completed Mainband Initialization Parameter (MBINIT.PARAM) Sideband Feature Extensions (SBFE) message exchanges comprising an MBINIT.PARAM SBFE request transmitted by the IC, e.g., chiplet, wherein the count of remote links is based on a count of completed MBINIT.PARAM SBFE message exchanges comprising an MBINIT.PARAM SBFE response transmitted by the IC, e.g., chiplet.

Example 19 includes the subject matter of Example 18, and optionally, wherein the SoC bridge is configured to determine the count of the plurality of connection links to be not more than a minimum of the count of local links and the count of remote links.

Example 20 includes the subject matter of any one of Examples 1-19, and optionally, wherein the SoC bridge is configured to process a credit return message from the other IC, e.g., chiplet, to determine an RxQ-ID based on an RxQ-ID value in an RxQ-ID field, to determine a credit path based on a Virtual Channel (VC) value in a VC field and a request/response type value in a request/response type field, and to determine a credit return to be assigned to the RxQ-ID for the credit path based on a credit return value in a credit return field.

Example 21 includes the subject matter of any one of Examples 1-20, and optionally, wherein a credit path of the one or more credit paths comprises a tuple of a Virtual Channel (VC) number and a request/response type.

Example 22 includes the subject matter of Example 21, and optionally, wherein the VC number is equal to or greater than zero and equal to or less than 7, and wherein the request/response type comprises a request type or a response type.

Example 23 includes the subject matter of any one of Examples 1-22, and optionally, wherein the plurality of connection links comprises up to four connection links.

Example 24 includes the subject matter of any one of Examples 1-23, and optionally, wherein the plurality of connection links comprises a plurality of Sideband (SB) links.

Example 25 includes the subject matter of any one of Examples 1-24, and optionally, wherein the plurality of connection links comprises a plurality of Mainband (MB) link stacks.

Example 26 includes the subject matter of any one of Examples 1-25, and optionally, wherein the plurality of connection links comprises one or more Sideband (SB) links and one or more Mainband (MB) link stacks.

Example 27 includes the subject matter of any one of Examples 1-26, and optionally, comprising a package comprising a plurality of Integrated Circuits (ICs), e.g., chiplets, the plurality of ICs comprising the IC and the other IC.

Example 28 includes an apparatus comprising an Integrated Circuit (IC), e.g., a chiplet, comprising Physical layer (PHY) circuitry to communicate with an other IC, e.g., chiplet, over a Universal Chiplet Interconnect Express (UCIe) link; and a System on Chip (SoC) bridge configured to transport to a local SoC management network a plurality of Management Transport Packets (MTPs) received from the other IC, e.g., chiplet, over a plurality of connection links of the UCIe link, the plurality of MTPs comprising one or more pluralities of credit-path MTPs corresponding to one or more credit paths, the SoC bridge configured to queue the plurality of MTPs by queuing a plurality of credit-path MTPs corresponding to a credit path in a plurality of First-In-First-Out (FIFO) Receive (Rx) Queues (RxQs), wherein the plurality of credit-path MTPs corresponding to the credit path are assigned to the plurality of FIFO RxQs according to a plurality of RxQ Identifiers (RxQ-IDs) corresponding to the plurality of connection links; and service the plurality of MTPs to the local SoC management network according to a predefined interleaving scheme defining a predefined order of servicing the plurality of credit-path MTPs from the plurality of FIFO RxQs.

Example 29 includes the subject matter of Example 28, and optionally, wherein the SoC bridge is configured to service to the local SoC management network a first credit-path MTP of the plurality of credit-path MTPs from a first FIFO RxQ having a first RxQ-ID, and, subsequent to servicing the first credit-path MTP, to service to the local SoC management network a second credit-path MTP of the plurality of credit-path MTPs from a second FIFO RxQ having a second RxQ-ID, which is subsequent to the first RxQ-ID in the plurality of RxQ-IDs.

Example 30 includes the subject matter of Example 28 or 29, and optionally, wherein the SoC bridge is configured to set an RxQ-ID value to an initial RxQ-ID value; service to the local SoC management network a credit-path MTP of the plurality of credit-path MTPs from an initial FIFO RxQ having an RxQ-ID corresponding to the initial RxQ-ID value; determine an incremented RxQ-ID value by incrementing the RxQ-ID value by one; service to the local SoC management network a next credit-path MTP of the plurality of credit-path MTPs from a FIFO RxQ having an RxQ-ID corresponding to the incremented RxQ-ID value; and repeat determining the incremented RxQ-ID value and service to the local SoC management network the next credit-path MTP from the FIFO RxQ having the RxQ-ID corresponding to the incremented RxQ-ID value, while wrapping around to the initial RxQ-ID value when reaching a maximal RxQ-ID value, the maximal RxQ-ID value based on a count of the plurality of RxQ-IDs.

Example 31 includes the subject matter of any one of Examples 28-30, and optionally, wherein the SoC bridge is configured to, based on a determination that a credit-path MTP is received as a segmented credit-path MTP, service to the local SoC management network a plurality of segments of the segmented credit-path MTP from a plurality of encapsulated MTPs serviced from the plurality of FIFO RxQs according to the interleaving scheme.

Example 32 includes the subject matter of Example 31, and optionally, wherein the SoC bridge is configured to identify the plurality of encapsulated MTPs based on identification of a segmentation-indication bit (s bit) to 1 in a header of each of the plurality of encapsulated MTPs except for a last encapsulated MTP of the plurality of encapsulated MTPs.

Example 33 includes the subject matter of any one of Examples 28-32, and optionally, wherein the SoC bridge is configured to, based on a determination that a credit-path MTP is received as a non-segmented credit-path MTP, service to the local SoC management network any encapsulated MTPs of the non-segmented credit-path MTP from a same single FIFO RxQ.

Example 34 includes the subject matter of any one of Examples 28-33, and optionally, wherein the SoC bridge is configured to identify a message from the other IC, e.g., chiplet, as a message that does not consume credits, and to process the message without allocating the message into the FIFO RxQs.

Example 35 includes the subject matter of any one of Examples 28-34, and optionally, wherein the SoC bridge is configured to service a first plurality of credit-path MTPs of a first credit path to the local SoC management network by servicing the first plurality of credit-path MTPs from a first plurality of FIFO RxQs according to the predefined interleaving scheme; and service a second plurality of credit-path MTPs of a second credit path to the local SoC management network by servicing the second plurality of credit-path MTPs from a second plurality of FIFO RxQs according to the predefined interleaving scheme.

Example 36 includes the subject matter of Example 35, and optionally, wherein the SoC bridge is configured to service the second plurality of credit-path MTPs from the second plurality of FIFO RxQs to the local SoC management network independently servicing the first plurality of credit-path MTPs from the first plurality of FIFO RxQs to the local SoC management network.

Example 37 includes the subject matter of any one of Examples 28-36, and optionally, wherein the SoC bridge is configured to process an RxQ-ID field in a header of a credit-path MTP to identify an RxQ-ID value, and to assign the credit-path MTP to a FIFO RxQ having an RxQ-ID corresponding to the RxQ-ID value.

Example 38 includes the subject matter of any one of Examples 28-37, and optionally, wherein the IC, e.g., chiplet, is configured to negotiate a count of the plurality of connection links with the other IC, e.g., chiplet.

Example 39 includes the subject matter of any one of Examples 28-38, and optionally, wherein the IC, e.g., chiplet, is configured to transmit to the other IC, e.g., chiplet, a Mainband Initialization Parameter (MBINIT.PARAM) configuration request comprising a Sideband Feature Extensions (SBFE) supported bit to indicate that extended sideband features are supported.

Example 40 includes the subject matter of any one of Examples 28-39, and optionally, wherein the IC, e.g., chiplet, is configured to transmit to the other IC, e.g., chiplet, a Mainband Initialization Parameter (MBINIT.PARAM) configuration response comprising a Sideband Feature Extensions (SBFE) supported bit set to 1 to indicate that extended sideband features are supported.

Example 41 includes the subject matter of Example 40, and optionally, wherein the IC, e.g., chiplet, is configured to transmit the MBINIT.PARAM response comprising the SBFE supported bit set to 1, based on a determination that an MBINIT.PARAM request from the other IC, e.g., chiplet, comprises the SBFE supported bit set to 1.

Example 42 includes the subject matter of any one of Examples 28-41, and optionally, wherein the IC, e.g., chiplet, is configured to transmit to the other IC, e.g., chiplet, a Mainband Initialization Parameter (MBINIT.PARAM) Sideband Feature Extensions (SBFE) request comprising a management transport protocol support bit set to 1 to indicate support of a management transport protocol for communication of the plurality of MTPs.

Example 43 includes the subject matter of any one of Examples 28-42, and optionally, wherein the IC, e.g., chiplet, is configured to transmit to the other IC, e.g., chiplet, a Mainband Initialization Parameter (MBINIT.PARAM) Sideband Feature Extensions (SBFE) response comprising a management transport protocol support bit set to 1 to indicate support of a management transport protocol for communication of the plurality of MTPs.

Example 44 includes the subject matter of Example 43, and optionally, wherein the IC, e.g., chiplet, is configured to transmit the MBINIT.PARAM SBFE response comprising the management transport protocol support bit set to 1, based on a determination that an MBINIT.PARAM SBFE request from the other IC, e.g., chiplet, comprises the management transport protocol support bit set to 1.

Example 45 includes the subject matter of any one of Examples 28-44, and optionally, wherein the SoC bridge is configured to determine a count of the plurality of connection links based on a count of local links and a count of remote links, wherein the count of local links is based on a count of completed Mainband Initialization Parameter (MBINIT.PARAM) Sideband Feature Extensions (SBFE) message exchanges comprising an MBINIT.PARAM SBFE request transmitted by the IC, e.g., chiplet, wherein the count of remote links is based on a count of completed MBINIT.PARAM SBFE message exchanges comprising an MBINIT.PARAM SBFE response transmitted by the IC, e.g., chiplet.

Example 46 includes the subject matter of Example 45, and optionally, wherein the SoC bridge is configured to determine the count of the plurality of connection links to be not more than a minimum of the count of local links and the count of remote links.

Example 47 includes the subject matter of any one of Examples 28-46, and optionally, wherein the SoC bridge is configured to transmit a credit return message to the other IC, e.g., chiplet, the credit return message comprising an RxQ-ID value in an RxQ-ID field to identify an RxQ-ID of an RxQ, a Virtual Channel (VC) value in a VC field and a request/response type value in a request/response type field to identify a credit path, and a credit return value in a credit return field to indicate a credit return to be assigned to the RxQ-ID for the credit path.

Example 48 includes the subject matter of any one of Examples 28-39, and optionally, wherein the credit path comprises a tuple of a Virtual Channel (VC) number and a request/response type.

Example 49 includes the subject matter of Example 48, and optionally, wherein the VC number is equal to or greater than zero and equal to or less than 7, and wherein the request/response type comprises a request type or a response type.

Example 50 includes the subject matter of any one of Examples 28-49, and optionally, wherein the plurality of connection links comprises up to four connection links.

Example 51 includes the subject matter of any one of Examples 28-50, and optionally, wherein the plurality of connection links comprises a plurality of Sideband (SB) links.

Example 52 includes the subject matter of any one of Examples 28-51, and optionally, wherein the plurality of connection links comprises a plurality of Mainband (MB) link stacks.

Example 53 includes the subject matter of any one of Examples 28-52, and optionally, wherein the plurality of connection links comprises one or more Sideband (SB) links and one or more Mainband (MB) link stacks.

Example 54 includes the subject matter of any one of Examples 28-53, and optionally, comprising a package comprising a plurality of ICs, e.g., chiplets, the plurality of ICs comprising the IC, e.g., chiplet, and the other IC, e.g., chiplet.

Example 55 includes a System on Chip (SoC) comprising the apparatus of any of examples 1-54.

Example 56 includes a package comprising the apparatus of any of examples 1-54.

Example 57 includes a computing device comprising the apparatus of any of examples 1-54.

Example 58 includes a computing system comprising the apparatus of any of examples 1-54.

Example 59 comprises a mobile device comprising the apparatus of any of Examples 1-54.

Example 60 comprises an apparatus comprising means for executing any of the described operations of Examples 1-54.

Example 61 comprises a product comprising one or more tangible computer-readable non-transitory storage media comprising instructions operable to, when executed by at least one processor, enable the at least one processor to cause a device to perform any of the described operations of Examples 1-54.

Example 62 comprises an apparatus comprising: a memory interface; and processing circuitry configured to: perform any of the described operations of Examples 1-54.

Example 63 comprises a method comprising any of the described operations of Examples 1-54.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. An apparatus comprising:
an Integrated Circuit (IC) comprising:
Physical layer (PHY) circuitry to communicate with an other IC over a Universal Chiplet Interconnect Express (UCIe) link; and
a System on Chip (SoC) bridge to transmit a plurality of Management Transport Packets (MTPs) to the other IC over a plurality of connection links of the UCIe link, the plurality of MTPs comprising one or more sequences of credit-path MTPs corresponding to one or more credit paths, the SoC bridge to transmit a plurality of credit-path MTPs of a sequence of credit-path MTPs over the plurality of connection links according to a predefined interleaving scheme defining a predefined order of assignment of the plurality of credit-path MTPs to a plurality of Receive (Rx) Queue Identifiers (RxQ-IDs) corresponding to the plurality of connection links.

2. The apparatus of claim 1, wherein the SoC bridge is configured to assign a first credit-path MTP of the plurality of credit-path MTPs to a first RxQ-ID, and to assign a second credit-path MTP, which is subsequent to the first credit-path MTP in the sequence of credit-path MTPs, to a second RxQ-ID, which is subsequent to the first RxQ-ID in the plurality of RxQ-IDs.

3. The apparatus of claim 1 or 2, wherein the SoC bridge is configured to:
set an RxQ-ID value to an initial RxQ-ID value;
assign a first-in-order credit-path MTP of the sequence of credit-path MTPs to an initial RxQ-ID corresponding to the initial RxQ-ID value;
determine an incremented RxQ-ID value by incrementing the RxQ-ID value by one;
assign a next-in-order credit-path MTP of the sequence of credit-path MTPs to an RxQ-ID corresponding to the incremented RxQ-ID value; and
repeat determining the incremented RxQ-ID value and assigning the next-in-order credit-path MTP to the RxQ-ID corresponding to the incremented RxQ-ID value, while wrapping around to the initial RxQ-ID value when reaching a maximal RxQ-ID value, the maximal RxQ-ID value based on a count of the plurality of RxQ-IDs.

4. The apparatus of any one of claims 1-3, wherein the SoC bridge is configured to, based on a determination that a credit-path MTP is to be transmitted as a segmented credit-path MTP, transmit a plurality of segments of the segmented credit-path MTP in a plurality of encapsulated MTPs assigned to the plurality of RxQ-IDs according to the interleaving scheme.

5. The apparatus of claim 4, wherein the SoC bridge is configured to set a segmentation-indication bit (s bit) to 1 in a header of each of the plurality of encapsulated MTPs except for a last encapsulated MTP of the plurality of encapsulated MTPs.

6. The apparatus of claim 4 or 5, wherein the SoC bridge is configured to ensure that no other encapsulated MTP, which does not belong to the segmented credit-path MTP, and which belongs to a same credit path as the segmented credit-path MTP, is to be interleaved over the plurality of RxQ-IDs before completing assignment of the plurality of encapsulated MTPs to the plurality of RxQ-IDs.

7. The apparatus of any one of claims 1-6, wherein the SoC bridge is configured to, based on a determination that a credit-path MTP is to be transmitted as a non-segmented credit-path MTP, transmit an entirety of the non-segmented credit-path MTP by assigning any encapsulated MTPs of the non-segmented credit-path MTP to a same single RxQ-ID.

8. The apparatus of any one of claims 1-7, wherein the SoC bridge is configured to:
transmit a first plurality of credit-path MTPs in a first sequence of credit-path MTPs over the plurality of connection links by assigning the first plurality of credit-path MTPs to the plurality of RxQ-IDs according to the predefined interleaving scheme; and
transmit a second plurality of credit-path MTPs in a second sequence of credit-path MTPs over the plurality of connection links by assigning the second plurality of credit-path MTPs to the plurality of RxQ-IDs according to the predefined interleaving scheme.

9. The apparatus of claim 8, wherein the SoC bridge is configured to assign the second plurality of credit-path MTPs to the plurality of RxQ-IDs independently from the assigning of the first plurality of credit-path MTPs to the plurality of RxQ-IDs.

10. The apparatus of any one of claims 1-9, wherein the SoC bridge is configured to set an RxQ-ID field in a header of a credit-path MTP to an RxQ-ID to which the credit-path MTP is assigned.

11. The apparatus of any one of claims 1-10, wherein the IC is configured to negotiate a count of the plurality of connection links with the other IC.

12. The apparatus of any one of claims 1-11, wherein the IC is configured to transmit to the other IC a Mainband Initialization Parameter (MBINIT.PARAM) configuration request comprising a Sideband Feature Extensions (SBFE) supported bit to indicate that extended sideband features are supported, and/or to transmit to the other IC a Mainband Initialization Parameter (MBINIT.PARAM) configuration response comprising a Sideband Feature Extensions (SBFE) supported bit set to 1 to indicate that extended sideband features are supported.

13. The apparatus of any one of claims 1-12, wherein the IC is configured to transmit to the other IC a Mainband Initialization Parameter (MBINIT.PARAM) Sideband Feature Extensions (SBFE) request comprising a management transport protocol support bit set to 1 to indicate support of a management transport protocol for communication of the plurality of MTPs, and/or to transmit to the other IC a Mainband Initialization Parameter (MBINIT.PARAM) Sideband Feature Extensions (SBFE) response comprising a management transport protocol support bit set to 1 to indicate support of a management transport protocol for communication of the plurality of MTPs.

14. The apparatus of any one of claims 1-13, wherein the SoC bridge is configured to determine a count of the plurality of connection links based on a count of local links and a count of remote links, wherein the count of local links is based on a count of completed Mainband Initialization Parameter (MBINIT.PARAM) Sideband Feature Extensions (SBFE) message exchanges comprising an MBINIT.PARAM SBFE request transmitted by the IC, wherein the count of remote links is based on a count of completed MBINIT.PARAM SBFE message exchanges comprising an MBINIT.PARAM SBFE response transmitted by the IC.

15. A System on Chip (SoC) package comprising the apparatus of any one of claims 1-14, the SoC package comprising:
a plurality of Integrated Circuits (ICs), the plurality of ICs comprising the IC and the other IC.
